(19) Europäisches Patentamt
European Patent Office
Office européen des brevets

(11) **EP 2 045 752 A2**

(12) **EUROPEAN PATENT APPLICATION**

(43) Date of publication:
**08.04.2009 Bulletin 2009/15**

(51) Int Cl.:
***G06F 21/00*** *(2006.01)*

(21) Application number: **08253165.8**

(22) Date of filing: **29.09.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **02.10.2007 JP 2007258992**

(71) Applicant: **Sony Corporation**
**Tokyo 108-0075 (JP)**

(72) Inventors:
• **Kuno, Hiroshi**
**Tokyo 108-0075 (JP)**
• **Okaue, Takumi**
**Tokyo 108-0075 (JP)**
• **Fujinuma, Keiichi**
**Tokyo 108-0075 (JP)**

(74) Representative: **Turner, James Arthur et al**
**D Young & Co**
**120 Holborn**
**London EC1N 2DY (GB)**

(54) **Recording system, information processing apparatus, storage apparatus, recording method, and program**

(57) Disclosed herein is a recording system including a storage apparatus incorporating a storage medium, and an information processing apparatus which is connectable to the storage apparatus and which holds a content to be recorded to the storage apparatus.

FIG.6

EP 2 045 752 A2

**Description**

BACKGROUND OF THE INVENTION

The present invention relates to a recording system, an information processing apparatus, a storage apparatus, a recording method, and a program.

In recent years, mass-storage optical disks typified by Blu-ray Disk (registered trademark; called BD for short) and HD DVD (High Definition DVD) have adopted a copyright protection technique known as AACS (Advanced Access Content System) whereby contents are recorded securely on the storage medium (see "AACS Homepage [online]" on the Internet at "http://www.aacsla.com/specifications/" established on August 2, 2006; searched for on September 1, 2007). In the AACS scheme, the contents to be recorded on mass-storage optical disks such as BDs are controlled in a manner inhibiting their illegal copying or rewinding. Rewinding a content means initializing information recorded to a storage medium regarding the content in question written thereon (e.g., allowable copy count, allowable reproduction count) for illegal use of that content.

The AACS specifications define the content recording method by which to write contents to storage media such as optical disks. According to its specifications, the AACS offers the following major features:

(1) A media ID unique to each piece of storage media is provided. The media ID is associated cryptically with a content key. This feature is intended to prevent illegal copying of contents between pieces of media.

(2) Every time a content and its content key are recorded to a piece of media, the media drive driving the medium in question generates a binding nonce (BN for short), which is disposable random data. The host apparatus receives the BN, encrypts the content key using the BN, and writes the encrypted content key to the medium along with the BN. This feature makes it possible to record (i.e. bind) the content key to each piece of media every time a content is recorded thereto, thereby inhibiting illegal rewinding of the content in question.

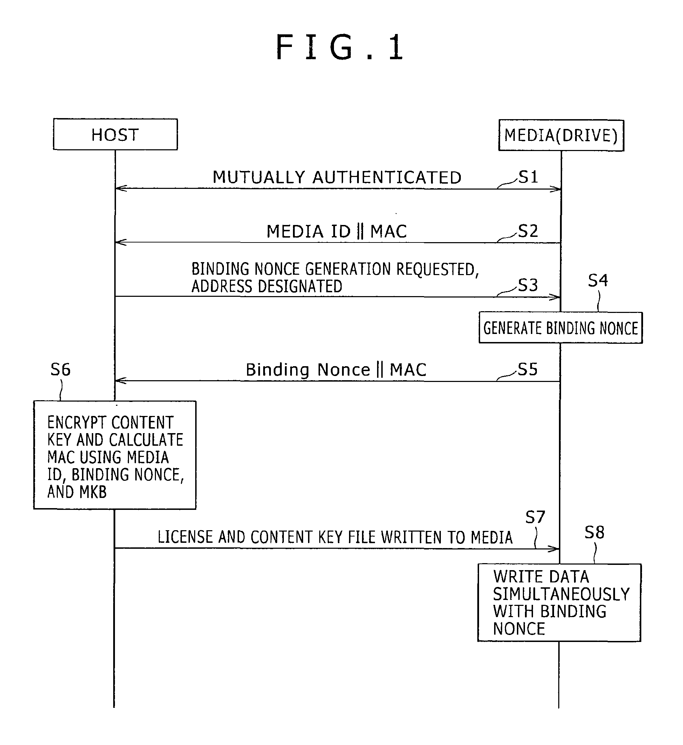

Fig. 1 schematically shows steps in which a content key is written to a piece of media such as BD in the traditional AACS scheme. In step S1, the host apparatus and the media drive mutually authenticate each other. In step S2, the host apparatus acquires a media ID from the media drive. In step S3, the host apparatus requests the media drive to generate a BN. The media drive generates a new BN in step S4 and sends it to the host apparatus in step S5. In step S6, the host apparatus encrypts a content key (also known as a title key) using the media ID, BN, and a media key block (MKB). In step S7, the host apparatus writes a license and an encrypted content key file to the piece of media. In step S8, the media drive writes to the piece of media both the content key file received from the host apparatus and the BN generated earlier in step S4. For example, if the piece of media in question is a BD, then the media drive writes the BN to a sector head of a CPS title key file. On a traditional AACS-compliant optical disk, both the data file such as the content key file and the BN are written to the same sector in order to associate the two with each other as outlined above.

It should be noted that the traditional AACS specifications apply merely to optical disks such as BDs and that BNs are generated by an optical disk drive. It has been assumed that there exists an apparatus (e.g., optical disk drive) capable of effecting mutual authentication with the host apparatus and of securely recording contents and BNs in combination to the disk. In other words, the traditional AACS specifications did not presuppose the use of memory cards incorporating flash memories or the like.

The Blu-ray Disk is part of a scheme under which the logical address of the location to which to record data is designated prior to the recording. Where the piece of media in use is a BD, the content key file and the BN are recorded simultaneously in step S8 of Fig. 1. In this case, the logical address of the destination location to which to write the file is designated earlier in step S3. To that designated address, both the file and the BN need to be written at the same time. That is, the traditional BN-using recording scheme is highly dependent on the physical format of media (e.g., BD). If the recording system is dependent on the physical format of media, then the following two major disadvantages are likely to emerge:

(A) The recording system is not suitable for media that are accessed in units of files.
Some storage media are subject to the file-by-file access (file level access) protocol such as PTP (Picture Transfer Protocol) or MTP (Media Transfer Protocol). When data is to be recorded to that type of media by use of the above-described BD-using recording scheme, it is necessary typically to obey the following sequences (1) through (3) constituting a recording procedure:

(1) The host apparatus acquires from the media drive a media ID (equivalent to an address) for writing a content key file.
(2) With the media ID designated, the host apparatus causes the media drive to generate a BN accordingly.
(3) The media drive ascertains that the content key file is recorded to the piece of media using the media ID.

When the content key file is recorded, the media drive writes the BN to the piece of media.

The need to follow the recording procedure above lowers the degree of freedom in putting or getting data on a file-by-file basis for access purposes. For example, it may be impossible first to record merely the content key file and then to write the BN in a temporally staggered manner.

When a content key file recorded on the piece of media is changed or deleted, then the corresponding BN has to be deleted as well. Special arrangements are desired permanently to associate each content key file with a relevant BN, which can be a further inconvenience. More specifically, where the storage medium in use is a BD, a file and a BN are recorded in the same sector and are thus easy to delete simultaneously as desired. If the storage medium is a memory card typically incorporating a flash memory, then BNs need to be written to a specifically allocated management area apart from files. This desires providing special arrangements for continuously checking to see whether any file is changed or deleted so that any file changed or deleted has to be matched with the corresponding BN being nullified.

(B) The format of files to be recorded becomes dependent on the recording format.

In the traditional recording scheme for BDs, the host apparatus needs to know the address to which to write a content key file before a BN is generated. That means the format of files to be recorded becomes dependent on the recording format of the content key file to be recorded on the medium. This requirement entails inconveniences in a number of cases. Illustratively, it may be desired to create a huge file on a piece of media so that the file may be used as a virtual file system to which to record content key files and contents. As another example, it may be desired to compress content key files and contents into a single file before they are recorded. In such cases, it may be impossible to know beforehand the address on the medium to which to write any content key file. That means it is difficult to utilize the traditional recording scheme for recording files on BDs. In other words, the traditional BD-using recording scheme fails to cover cases where a large body of data such as a disk image containing a plurality of content keys is to be recorded as a single file. Traditionally, it may have been impossible to switch recording systems as desired depending on the application of interest.

Various respective aspects and features of the invention are defined in the appended claims. Combinations of features from the dependent claims may be combined with features of the independent claims as appropriate and not merely as explicitly set out in the claims.

The embodiments of the present invention has been made in view of the above circumstances and provides a recording system, an information processing apparatus, a storage apparatus, a recording method, and a program with novel improvements for allowing contents to be recorded securely without becoming dependent on the physical format of storage media.

In carrying out the present invention and according to one embodiment thereof, there is provided a recording system including a storage apparatus incorporating a storage medium, and an information processing apparatus which is connectable to the storage apparatus and which holds therein a content to be recorded to the storage apparatus. Upon recording of the content to the storage apparatus, the information processing apparatus sends a nonce generation request to the storage apparatus. Upon receipt of the nonce generation request from the information processing apparatus, the storage apparatus generates a nonce constituting a variable unique to the nonce generation request and sends the generated nonce to the information processing apparatus. Using the nonce received from the storage apparatus, the information processing apparatus encrypts a data file regarding the content and records the encrypted data file to the storage medium of the storage apparatus. The information processing apparatus calculates a hash value of the encrypted data file and sends a nonce write request including the hash value to the storage apparatus. Upon receipt of the nonce write request from the information processing apparatus, the storage apparatus associates the hash value with the nonce and records the hash value and the nonce to the storage medium.

Preferably, upon use of the content stored in the storage apparatus, the information processing apparatus may send to the storage apparatus a transmission request requesting transmission of the nonce and the hash value from the storage apparatus. Upon receipt of the transmission request from the information processing apparatus, the storage apparatus may read the nonce and the hash value from the storage medium and may send the retrieved nonce and hash value to the information processing apparatus. The information processing apparatus may acquire the encrypted data file from the storage apparatus through retrieval from the storage medium. The information processing apparatus may calculate a hash value of the encrypted data file, match the calculated hash value against the hash value received from the storage apparatus and, if there is a full match between the two hash values, decrypt the encrypted data file using the nonce received from the storage apparatus.

Preferably, upon recording of the content to the storage apparatus, the information processing apparatus and the storage apparatus may mutually authenticate each other so as to share a session key therebetween. Upon sending the nonce write request to the storage apparatus, the information processing apparatus may calculate a MAC (message authentication code) value of the hash value using the session key, and may send to the storage apparatus the nonce write request including the hash value and the MAC value derived from the hash value. Upon receipt of the nonce write request from the information processing apparatus, the storage apparatus may calculate a MAC value of the hash value included in the nonce write request by use of the session key and, if there is a full match between the calculated MAC value and the MAC value derived from the hash value included in the nonce write request, may associate the hash value with the nonce upon recording of the hash value and the nonce to the storage medium.

Preferably, the information processing apparatus and the storage apparatus may each calculate the MAC value of the hash value and the nonce combined by use of the session key.

Preferably, the storage medium of the storage apparatus may have an ordinary data storage area and a secure data management area as storage areas. The encrypted data file may be written to the ordinary data storage area and the hash value and the nonce may be written to the data management area.

Preferably, the storage apparatus may be a piece of removable media which is attached removably to the information processing apparatus.

Preferably, the storage apparatus may be a content processing apparatus structured to integrate the storage medium with a drive configured to write and read data to and from the storage medium.

Preferably, the data file regarding the content may include at least one of four files consisting of a content file, a content key file, an identification information file and a use condition file, the content file having the content therein, the content key file being used to decrypt the encrypted data file, the identification information file representing identification information for identifying the content, the use condition file defining conditions for using the content.

According to another embodiment of the present invention, there is provided an information processing apparatus which is connectable to a storage apparatus incorporating a storage medium and which holds therein a content to be recorded to the storage apparatus. The information processing apparatus including: a nonce generation request section configured to send a nonce generation request to the storage apparatus; a nonce reception section configured to receive from the storage apparatus a nonce constituting a variable unique to the nonce generation request in response to the nonce generation request sent to the storage apparatus; an encryption section configured to encrypt a data file regarding the content by use of the nonce received from the storage apparatus; a data recording section configured to record the encrypted data file to the storage medium of the storage apparatus; a hash calculation section configured to calculate a hash value of the encrypted data file; and a nonce write request section configured to send a nonce write request including the hash value to the storage apparatus.

Preferably, the information processing apparatus may further include: a transmission request section configured to send to the storage apparatus a transmission request requesting transmission of the nonce and the hash value from the storage apparatus; a management information reception section configured to receive from the storage apparatus the nonce and the hash value through retrieval from the storage medium in response to the transmission request; a data acquisition section configured to acquire the encrypted data file from the storage apparatus through retrieval from the storage medium; a hash calculation section configured to calculate a hash value of the encrypted data file acquired from the storage apparatus; a hash value matching section configured to match the calculated hash value against the hash value received from the storage apparatus; and a decryption section configured to decrypt the encrypted data file using the nonce received from the storage apparatus if there is a full match between the two hash values.

Preferably, the information processing apparatus may further include: an authentication section configured to perform mutual authentication with the storage apparatus so as to share a session key therewith; and a MAC value calculation section configured to calculate a MAC value of the hash value using the session key. The nonce write request section may send to the storage apparatus the nonce write request including the hash value and the MAC value derived from the hash value. When calculating the MAC value of the hash value, the MAC value calculation section may preferably calculate the MAC value of the hash value and the nonce combined by use of the session key.

Preferably, the storage medium of the storage apparatus may have an ordinary data storage area and a secure data management area as storage areas. The encrypted data file may be written to the ordinary data storage area and the hash value and the nonce may be written to the data management area.

Preferably, the data file regarding the content may include at least one of four files consisting of a content file, a content key file, an identification information file and a use condition file, the content file having the content therein, the content key file being used to decrypt the encrypted data file, the identification information file representing identification information for identifying the content, the use condition file defining conditions for using the content.

According to a further embodiment of the present invention, there is provided a storage apparatus which is connectable to an information processing apparatus and which serves to store a content held by the information processing apparatus. The storage apparatus including: a nonce generation request reception section configured to receive a nonce generation request from the information processing apparatus; a nonce generation section configured to generate a nonce constituting a variable unique to the nonce generation request in response to the nonce generation request having been received; a nonce transmission section configured to send the nonce to the information processing apparatus; a storage medium configured to store a data file regarding the content, the data file being encrypted by the information processing apparatus using the nonce; a nonce write request reception section configured to receive a nonce write request including a hash value of the encrypted data file from the information processing apparatus; and a nonce recording section configured to associate the hash value included in the nonce write request with the nonce generated by the nonce generation section upon recording of the hash value and the nonce to the storage medium in response to the nonce write request having been received.

Preferably, the storage apparatus may further include: a transmission request reception section configured to receive from the information processing apparatus a transmission request requesting transmission of the nonce and the hash value to the information processing apparatus through retrieval from the storage medium; and a management information transmission section configured to send to the information processing apparatus the nonce and the hash value through retrieval from the storage medium in response to the transmission request having been received.

Preferably, the storage apparatus may further include an authentication section configured to perform mutual authentication with the information processing apparatus so as to share a session key therewith. The nonce write request reception section may receive the nonce write request including the hash value and a MAC value of the hash value calculated by the information processing apparatus using the session key. The storage apparatus may further include a verification section configured to calculate a MAC value of the hash value included in the nonce write request by use of the session key in response to the nonce write request having been received, so as to verify whether there is a full match between the calculated MAC value and the MAC value of the hash value included in the nonce write request. If there is a full match between the two MAC values, then the nonce recording section may associate the hash value with the nonce upon recording of the hash value and the nonce to the storage medium.

Preferably, when calculating the MAC value of the hash value, the verification section may calculate the MAC value of the hash value and the nonce combined by use of the session key.

Preferably, the storage medium of the storage apparatus may have an ordinary data storage area and a secure data management area as storage areas; wherein the encrypted data file may be written to the ordinary data storage area and the hash value and the nonce may be written to the data management area.

Preferably, the storage apparatus may be a piece of removable media which is attached removably to the information processing apparatus.

Preferably, the storage apparatus may be a content processing apparatus structured to integrate the storage medium with a drive configured to write and read data to and from the storage medium.

Preferably, the data file regarding the content may include at least one of four files consisting of a content file, a content key file, an identification information file and a use condition file, the content file having the content therein, the content key file being used to decrypt the encrypted data file, the identification information file representing identification information for identifying the content, the use condition file defining conditions for using the content.

According to an even further embodiment of the present invention, there is provided a recording method for use with an information processing apparatus which is connectable to a storage apparatus incorporating a storage medium and which holds therein a content to be recorded to the storage apparatus. The recording method including the steps of: sending a nonce generation request to the storage apparatus upon recording of the content to the storage apparatus; receiving from the storage apparatus a nonce constituting a variable unique to the nonce generation request in response to the nonce generation request sent to the storage apparatus; encrypting a data file regarding the content by use of the nonce received from the storage apparatus; recording the encrypted data file to the storage medium of the storage apparatus; calculating a hash value of the encrypted data file; and sending a nonce write request including the hash value to the storage apparatus thereby causing the storage apparatus to associate the hash value with the nonce upon recording of the hash value and the nonce to the storage medium.

According to a still further embodiment of the present invention, there is provided a recording method for use with a storage apparatus which is connectable to an information processing apparatus and which serves to store a content held by the information processing apparatus. The recording method including the steps of: receiving a nonce generation request from the information processing apparatus; generating a nonce constituting a variable unique to the nonce generation request in response to the nonce generation request having been received; sending the nonce to the information processing apparatus; recording to the storage medium a data file regarding the content, the data file being encrypted by the information processing apparatus using the nonce; receiving a nonce write request including a hash value of the encrypted data file from the information processing apparatus; and associating the hash value included in the nonce write request with the nonce generated in the nonce generating step upon recording of the hash value and the nonce to the storage medium in response to the nonce write request having been received.

According to a yet further embodiment of the present invention, there is provided a program for use with a computer of an information processing apparatus which is connectable to a storage apparatus incorporating a storage medium and which holds therein a content to be recorded to the storage apparatus. The program causing the computer to execute a procedure including the steps of: sending a nonce generation request to the storage apparatus upon recording of the content to the storage apparatus; receiving from the storage apparatus a nonce constituting a variable unique to the nonce generation request in response to the nonce generation request sent to the storage apparatus; encrypting a data file regarding the content by use of the nonce received from the storage apparatus; recording the encrypted data file to the storage medium of the storage apparatus; calculating a hash value of the encrypted data file; and sending a nonce write request including the hash value to the storage apparatus thereby causing the storage apparatus to associate the hash value with the nonce upon recording of the hash value and the nonce to the storage medium.

According to another embodiment of the present invention, there is provided a program for use with a computer of a storage apparatus which is connectable to an information processing apparatus and which serves to store a content held by the information processing apparatus. The program causing the computer to execute a procedure including the steps of: receiving a nonce generation request from the information processing apparatus; generating a nonce constituting a variable unique to the nonce generation request in response to the nonce generation request having been received; sending the nonce to the information processing apparatus; recording to the storage medium a data file regarding the content, the data file being encrypted by the information processing apparatus using the nonce; receiving a nonce write request including a hash value of the encrypted data file from the information processing apparatus; and associating the hash value included in the nonce write request with the nonce generated in the nonce generating step upon recording of the hash value and the nonce to the storage medium in response to the nonce write request having been received.

According to the embodiments of the present invention, as outlined above, it is possible to store contents securely without becoming dependent on the physical format of the storage apparatus in use (i.e., media).

Embodiments of the invention will now be described with reference to the accompanying drawings, throughout which like parts are referred to by like references, and in which:

Fig. 1 is a sequence diagram indicating how contents are recorded to an optical disk in the traditional AACS scheme;

Figs. 2A and 2B are schematic views explanatory of how a recording system practiced as a first embodiment of the present invention compares with a recording system that uses traditional optical disks as its storage media;

Fig. 3 is a block diagram showing a typical structure of a host apparatus as part of the first embodiment;

Fig. 4 is a block diagram showing a typical structure of a piece of removable media as part of the first embodiment;

Fig. 5 is a block diagram showing functional structures of the host apparatus and piece of removable media constituting the first embodiment;

Fig. 6 is a sequence diagram depicting a recording method for use with the recording system as the first embodiment;

Fig. 7 is a sequence diagram illustrating a content-using method for use with the recording system as the first embodiment;

Fig. 8 is a schematic view explanatory of a recording system practiced as a second embodiment of the present invention;

Fig. 9 is a block diagram showing a typical structure of a portable reproduction apparatus constituting the recording apparatus of the second embodiment; and

Figs. 10A, 10B and 10C are schematic views explanatory of files typically recorded on the removable media utilized by the first embodiment of the present invention.

The preferred embodiments of the present invention will now be described in reference to the accompanying drawings. Throughout the drawings and the descriptions that follow, like or corresponding parts in functional and structural terms will be designated by like reference numerals, and their explanations will be omitted where redundant.

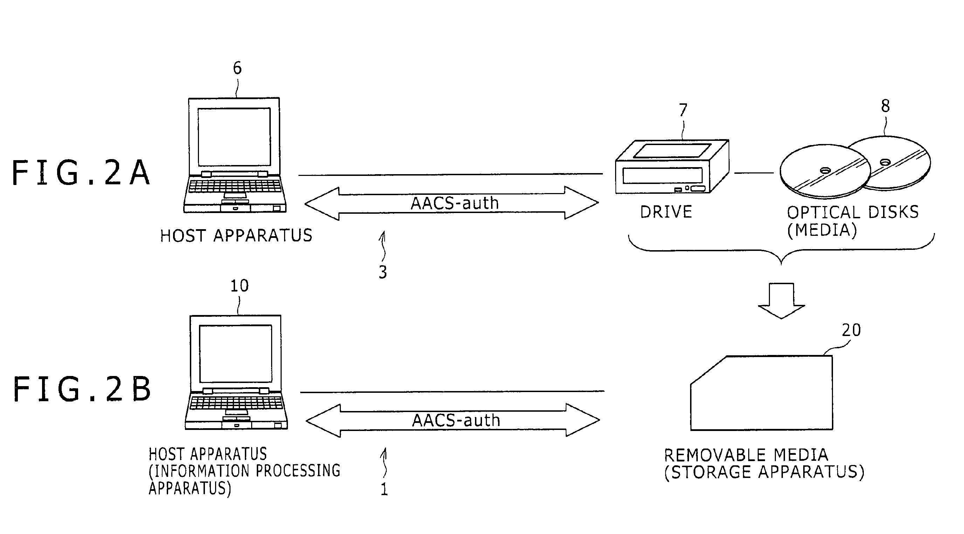

A recording system 1 practiced as the first embodiment of the present invention is first described below by referring to Figs. 2A and 2B. The recording system 1 of the first embodiment is schematically outlined in Fig. 2B in comparison with a recording system 3, in Fig. 2A, that uses traditional optical disks as its storage media.

As shown in Fig. 2A, the traditional recording system 3 has a host apparatus 6 connected to or incorporating an optical disk drive 7. An optical disk 8 such as Blu-ray Disk (registered trademark; called the BD hereunder) or HD DVD serving as a storage medium is loaded into the drive 7. In the recording system 3, the host apparatus 6 may write data files of contents, content keys, etc., to the optical disk 8 by means of the drive 7. Upon recording of contents or the like to the optical disk 8, the host apparatus 6 and drive 7 carry out steps therebetween in the above-mentioned AACS scheme as illustrated in Fig. 1. The AACS scheme makes it possible to prevent illegal copying or rewinding of contents. For example, the drive 7 generates binding nonces and writes the generated binding nonces to the optical disk 8 serving as the storage medium.

By contrast, the recording system 1 of the first embodiment shown in Fig. 2B is made up of a host apparatus 10 and a piece of removable media 20 that is removably attached to the host apparatus 10. The host apparatus 10 and the removable medium 20 are an information processing apparatus and a storage apparatus respectively, both practiced according to the embodiments of the present invention. The removable medium 20 is a storage apparatus that incorporates a storage medium such as a flash memory; it is removably attached to a mounting section (e.g., slot, connector) of the host apparatus 10. The removable medium 20 of the first embodiment is an apparatus that integrates the drive 7 of the traditional recording system 3 with the optical disk 8. As such, the removable medium 20 itself generates binding nonces and writes them to the storage medium according to the AACS specifications. The host apparatus 10 and removable medium 20 will each be described below in more detail.

The host apparatus 10 is a recording apparatus acting as the host that causes the storage apparatus (medium) such as the removable medium 20 to record data files of contents, content keys, etc. Typically, the host apparatus 10 is constituted by computer equipment (laptop, desktop or any other type) such as a personal computer (PC for short). Alternatively, the host apparatus 10 may be a PDA (personal digital assistant), a home video game machine, recording/ reproducing apparatus such as a DVD/HDD recorder, home information equipment, or some other suitable user terminal.

The removable medium 20 is a storage apparatus that incorporates a storage medium capable of accommodating data files of contents, content keys and the like. The storage medium incorporated in the removable medium 20 may be constituted by a flash memory or some other suitable semiconductor memory composed of a nonvolatile memory or the like. Typically, the removable medium 20 may be a memory card or a connector-equipped memory. The memory card is a storage medium such as a flash memory housed in a card-like package. The memory card has come into general use as the storage apparatus for digital data equipment such as PCs, digital cameras, and portable video/audio players. The connector-equipped memory is basically a package which contains the flash memory or like storage medium and which is furnished with a connector for plugging into the information processing apparatus such as the PC. The connector-equipped memory is typified by a USB (Universal Serial Bus) memory made up of a packaged flash memory furnished with a USB connector.

The removable medium 20 is removably connected to the mounting section (e.g., slot, connector) of the host apparatus 10. The host apparatus 10 may write data files of contents, content keys and other data held inside to the removable medium 20 attached to the mounting section and may read such data files from the removable medium 20.

Diverse kinds of contents may be handled by the first embodiment. The contents may illustratively include audio contents such as musical compositions, lectures, and radio programs; video contents such as movies, TV programs, video programs, and still images making up photos, paintings, diagrams and the like; electronic books (E-books), video games, and software programs. Although the ensuing description will center on music or video contents as the contents of interest, they are merely for descriptive purposes and are not limitative of the embodiments of the present invention. The contents to be handled by the first embodiment are subject to copyright management under various schemes such as the AACS.

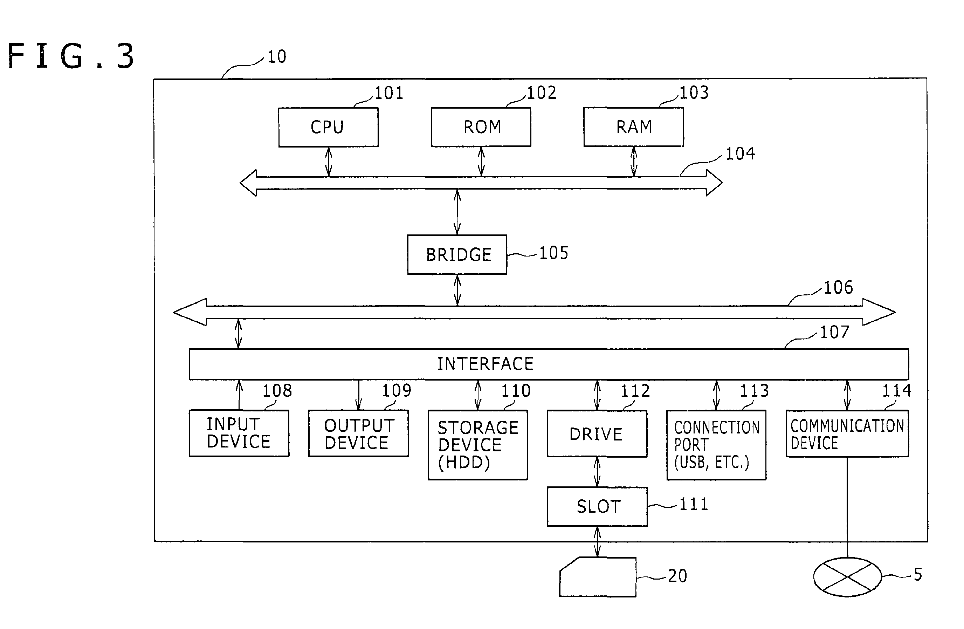

Described below in reference to Fig. 3 is a typical hardware constitution of the host apparatus 10 serving as the information processing apparatus of the first embodiment. Fig. 3 is a block diagram showing a typical structure of the host apparatus 10 as part of the first embodiment. In the example of Fig. 3, the host apparatus 10 is a PC. Alternatively, the host apparatus 10 may be some other suitable information processing apparatus.

As shown in Fig. 3, the host apparatus 10 is illustratively made up of a CPU (central processing unit) 101, a ROM (read only memory) 102, a RAM (random access memory) 103, a host bus 104, a bridge 105, an external bus 106, an interface 107, an input device 108, an output device 109, a storage device (e.g., HDD) 110, a slot 111, a drive 112, a connection port 113, and a communication device 114.

The CPU 101 functions as an arithmetic processing unit and controller and acts in accordance with various programs to control the internal components of the host apparatus 10. The CPU 101 carries out diverse processes in keeping with the programs that are held in the ROM 102 or loaded from the storage device 110 into the RAM 103. The ROM 102 accommodates the programs and operation parameters to be used by the CPU 101 and also serves as a buffer that buffers the access operations from the CPU 101 to the storage device 110. The RAM 103 accommodates temporarily the programs being used by the CPU 101 for processing as well as the parameters that may vary during the processing of the CPU 101. These components are interconnected via the host bus 104 that is typically constituted by a CPU bus. The host bus 104 is connected through the bridge 105 to the external bus 106 such as a PCI (Peripheral Component Interconnect/Interface) bus.

The input device 108 is generally constituted by an operation section typically made up of a mouse, a keyboard, a touch-sensitive panel, buttons, switches and/or levers; and by an input control circuit that generates input signals for output to the CPU 101. The user of the host apparatus 10 may operate the input device 108 to input diverse data to the host apparatus 10 or to give instructions to the host apparatus 10 for processing. The output device 109 is illustratively constituted by a display device made up of a CRT (cathode ray tube) display unit, a liquid crystal display (LCD) unit, or lamps; and by an audio output device such as speakers.

The storage device 110 is a data storage section of the host apparatus 10 as part of the first embodiment. As such, the storage device 110 may typically be composed of a hard disk drive (HDD). The storage device 110, formed by a hard disk serving as the storage medium and by a drive that drives the hard disk, accommodates the programs to be executed and diverse data to be operated on by the CPU 101.

The slot 111 is a typical mounting device through which the removable medium 20 is attached removably to the host apparatus 10. When the removable medium 20 such as the above-mentioned memory card is attached to the slot 111, the host apparatus 10 can communicate data with the removable medium 20.

The drive 112, a device that drives the removable medium 20, is incorporated in or attached externally to the host apparatus 10. The drive 112 serves to write and read data to and from the removable medium 20 inserted in the slot 111 of the host apparatus 10.

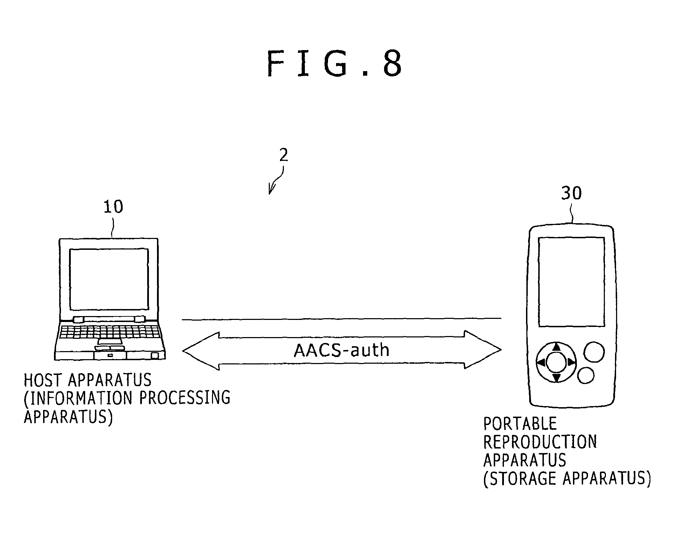

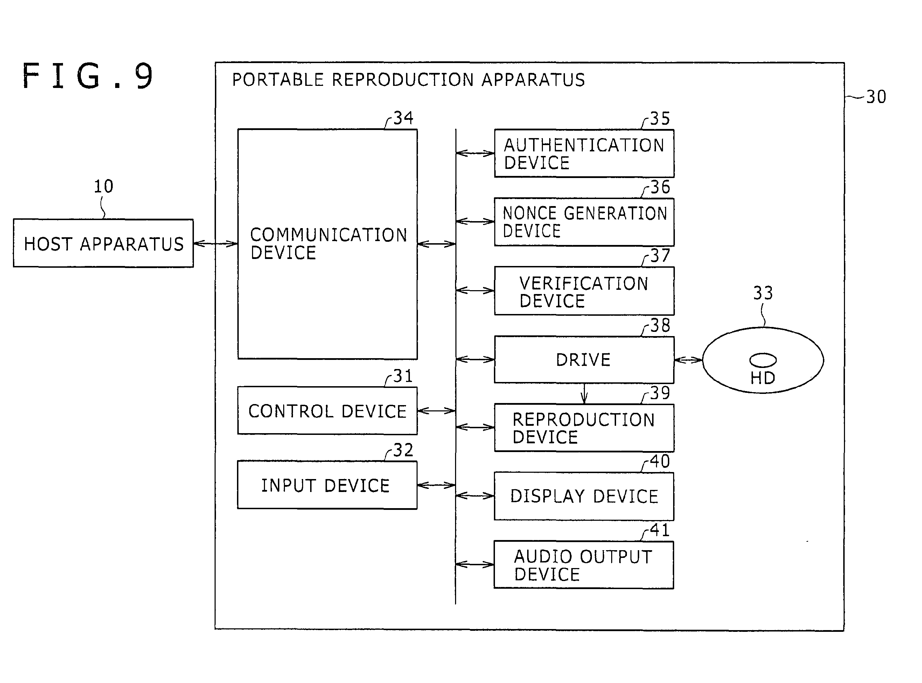

The connection port 113, used to connect an external peripheral device, typically includes USB or IEEE 1394 connectors or other suitable connection terminals. The connection port 113 is connected to the CPU 101 and other components by way of the interface 107, external bus 106, bridge 105, and host bus 104. Illustratively, the connector-equipped removable medium 20 such as the above-mentioned USB memory may be connected to the connection port 111 (e.g., to a USB port). In addition to the removable medium 20, an external apparatus such as a portable video/audio player, a PDA, or a HDD may be connected to the connection port 111 typically using a cable. Any one of these external attachments may serve as the storage device according to the embodiments of the present invention (as will be discussed later in reference to Figs. 8 and 9).

The communication device 114 constitutes a communication interface typically composed of a communication device for connecting to a network 5 such as the Internet or a LAN. The communication device 114 sends and receives data to and from an external apparatus connected via the network 5. For example, the communication device 114 may receive contents, content keys, licenses, and secret keys from a content delivery server on the network 5. The communication device 114 may let the external apparatus connect to the host apparatus 10 either in wired fashion or in a wireless manner over a wireless LAN or the like.

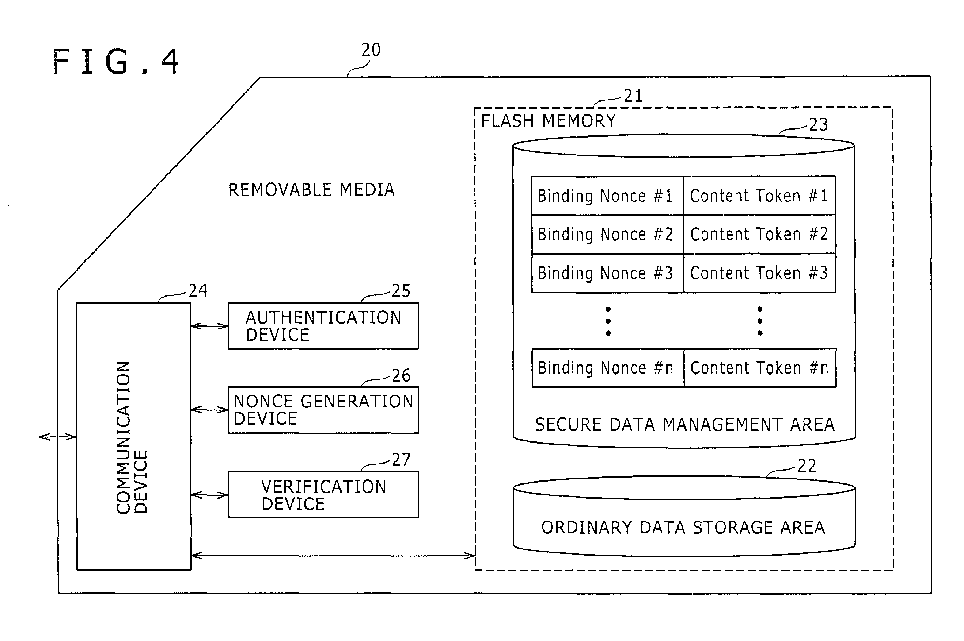

Described below in reference to Fig. 4 is a hardware constitution of the removable medium 20 acting as the storage apparatus of the first embodiment. Fig. 4 is a block diagram showing a typical structure of the removable medium 20 as part of the first embodiment.

As shown in Fig. 4, the removable medium 20 is made up of a flash memory 21, a communication device 24, an authentication device 25, a nonce generation device 26, and a verification device 27, all contained in a single package. The removable medium 20 is assigned a media ID that constitutes identification information unique to this piece of media. The media ID is stored securely in the flash memory 21.

The flash memory 21 is a typical storage medium which retains various kinds of data and which is incorporated in the removable medium 20. Having the flash memory 21 housed in a package constitutes the memory card that serves as the removable medium 20 of the first embodiment. The flash memory 21 of the removable medium 20 may be replaced by other suitable storage media including nonvolatile memories such as EEPROM (electronically erasable and programmable ROM), FeRAM (ferroelectric RAM), and MRAM (magneto-resistive RAM); or by some other suitable semiconductor memory.

The flash memory 21 is divided into a plurality of storage areas. As shown in Fig. 4, the flash memory 21 has an ordinary data storage area 22 and a secure data management area 23 as storage areas. The ordinary data storage area 22 is an area to which to write ordinary data such as contents, content keys, licenses (i.e., content use condition information), and content attribute information. The user may get the host apparatus 10 to write or read desired data to or from the ordinary data storage area 22.

The data management area 23 is an area that securely stores management information for preventing the illegal use of contents in the ordinary data storage area 22 for copyright protection purposes. The data management area 23 serves as a secret area to which the user's free access is restricted. In the data management area 23, a binding nonce generated every time a data file is written to the ordinary data storage area 22 is recorded in association with a hash value or "content token" of the data file in question. In the example of Fig. 4, contents #1 through #n (not shown) recorded in the ordinary data storage area 21 are associated respectively with binding nonces #1 through #n and with content tokens #1 through #n.

What follows is a description of a binding nonce (BN for short where appropriate) and a content token (CT for short where appropriate).

According to the AACS specifications mentioned above, when a file of content-related data (including a content itself, content keys, content identification information, and license) is to be written to a piece of media, the media side generates a binding nonce anew and has the data file in question recorded to the medium in association with the generated BN. Every time a content-related data file is written to the medium, a BN is generated in a manner unique to the file in question and is recorded in association with that file. Whenever any recorded content is updated, a new BN is generated so that the content of interest will remain bound by the new BN to the medium in use. This arrangement is intended to prevent illegal rewinding of contents. Typically, BNs serve to prevent illicit initialization of the information about content utilization (i.e., copy count, reproduction count, and reproduction time limit authorized by a license).

In the recording system 1 of the first embodiment, the binding nonce scheme defined by the AACS is used to prevent illegal rewinding of contents. The nonce is a variable generated in a manner unique to each content file recorded to a piece of media. Any value, such as a single-use random number or a counter value, may be utilized as the nonce as long as the number is assured of its uniqueness. Illustratively, the recording system 1 of the first embodiment utilizes single-use random numbers as nonces for "bindingly" recording contents to media. In that sense, the nonces of the first embodiment correspond to the binding nonces (BNs for short) defined by the AACS.

The content token (CT) is a hash value for a content-related data file to be recorded to a piece of media. Content-related data files may illustratively include files of contents themselves (e.g., video content data files, audio content data files), files of content keys for decrypting encrypted contents, content identification information (e.g., content IDs, content titles), and files of licenses that specify content use conditions. Such content-related data files are written to the ordinary data storage area 22 in the flash memory 21 of the above-mentioned removable medium 20.

The CT, a hash value for each of such content-related data files, constitutes identification information corresponding to the data files on a one-to-one basis. A CT is representative of the corresponding data file (i.e., as a token) and allows the content in the file recorded on the medium to be identified uniquely.

The significance of recording the CT is explained below. A BD according to the AACS is traditionally recorded along with the corresponding content-related data file simultaneously to the same sector, so that the BD stays associated with the file in question (see Fig. 1). Meanwhile, the recording system 1 of the first embodiment has both the ordinary data storage area 22 and the secure data management area 23 established on the storage medium of the storage apparatus (i.e., in the flash memory 21 of the removable medium 20), as shown in Fig. 4. Content-related data files are written to the ordinary data storage area 22 while BNs are recorded to the data management area 23. CTs are further written to the data management area 23 in association with the BNs. Thus recorded, the CTs allow the content-related data files to remain associated with the BNs that are kept in a separately established storage area. This feature, which increases the degree of freedom in recording BNs and content-related data files, can be applied to the removable medium 20 that is accessed on a file-by-file basis.

Described below in reference to Fig. 4 is a typical structure of the removable medium 20. The communication device 24 serves as a communication interface for communicating data with the host apparatus 10. Illustratively, the communication device 24 may receive data files of contents to be recorded, authentication information, CTs, various commands, delivered contents, content keys, licenses, and secret keys from the host apparatus 10. By way of the communication device 24, the host apparatus 10 may send and receive various data to and from the removable medium 20 attached to the host apparatus 10. Typically, the host apparatus 10 may write content files to the flash memory 21 or read contents therefrom through the communication device 24.

The authentication device 25 permits mutual authentication between the host apparatus 10 and the removable medium 20 and allows a session key to be shared therebetween. Illustratively, the authentication device 25 carries out its authentication process in accordance with the AACS.

The nonce generation device 26 generates binding nonces (BNs) mentioned above. The nonce generation device 26 may typically be composed of a random number generator generating single-use random numbers or a counter that generates counter values. Every time a nonce generation request is received from the host apparatus 10 through the communication device 24, the nonce generation device 26 generates a single-use random number and returns the randomly generated data as a BN to the host apparatus 10.

The verification device 27 is capable of verifying whether any of the data recorded on the removable medium 20 has been falsified or destroyed. In the recording system 1, the data (e.g., BN, CT) exchanged between the host apparatus 10 and the removable medium 20 is supplemented with a MAC (message authentication code) value assigned to the data in question for protection against data falsification and destruction. Upon receipt of data from the host apparatus 10, the verification device 27 calculates the MAC value of the received data and compares the calculated MAC value with the MAC value attached earlier to the data in question by the host apparatus 10, so as to verify whether or not the data has been falsified or destroyed. Upon transmission of data from the removable medium 20 to the host apparatus 10, the verification device 27 calculates the MAC value of the outgoing data and attaches the calculated MAC value to the data. The verification device 27 thus serves to ensure secure data exchanges between the host apparatus 10 and the removable medium 20.

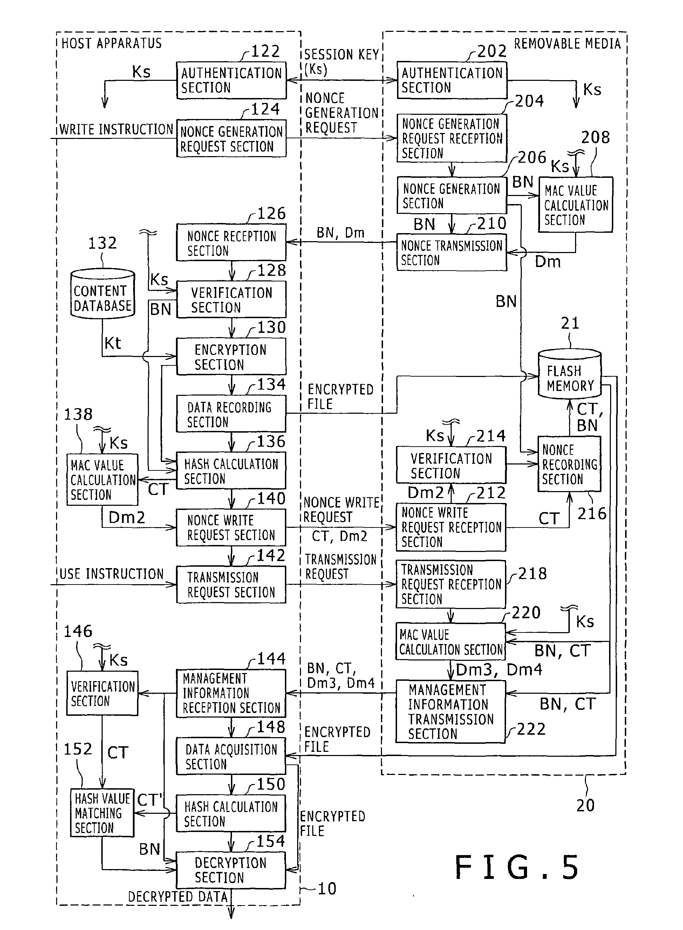

Described below in reference to Fig. 5 is how the host apparatus 10 and removable medium 20 of the first embodiment are constituted in functional terms. Fig. 5 is a block diagram showing functional structures of the host apparatus 10 and removable medium 20 constituting the first embodiment.

As shown in Fig. 5, the host apparatus 10 includes an authentication section 122, a nonce generation request section 124, a nonce reception section 126, a verification section 128, an encryption section 130, a content database 132, a data recording section 134, a hash calculation section 136, a MAC value calculation section 138, a nonce write request section 140, a transmission request section 142, a management information transmission section 144, a verification section 146, a data acquisition section 148, a hash calculation section 150, a hash value matching section 152, and a decryption section 154. These component sections may be implemented by combining software (e.g., relevant function execution programs) with hardware (e.g., CPU 101), the programs being installed in the host apparatus 10. Alternatively, the component sections may be practiced using dedicated hardware.

The removable medium 20 includes an authentication section 202, a nonce generation request reception section 204, a nonce generation section 206, a MAC value calculation section 208, a nonce transmission section 210, a nonce write request reception section 212, a verification section 214, a nonce recording section 216, a transmission request reception section 218, a MAC value calculation section 220, and a management information transmission section 222. The authentication section 202 is formed by the above-mentioned authentication device 25 (see Fig. 4). The nonce generation request reception section 204, nonce transmission section 210, nonce write request reception section 212, transmission request reception section 218, and management information transmission section 222 are constituted by the communication device 24 (Fig. 4). The nonce generation section 206 is formed by the nonce generation device 25 (Fig. 4). The MAC value calculation section 208, MAC value calculation section 220, and verification section 214 are included in the verification section 27 (Fig. 4). The nonce recording section 216 is implemented by a device (not shown) for writing and reading data to and from the flash memory 21 under instructions from the host apparatus 10.

What follows is a description of how the host apparatus 10 and removable medium 20 are constituted and how their component sections are related to one another.

When the host apparatus 10 is to write or read data to or from the removable medium 20, the authentication section 122 of the host apparatus 10 and the authentication section 202 of the removable medium 20 carry out mutual authentication using an AACS-defined method (AACS-auth) so as to share a session key Ks therebetween. The authentication section 122 forwards the session key Ks to the verification sections 128 and 146 and to the MAC value calculation section 138 (to be discussed later). The authentication section 202 sends the session key Ks to the verification section 214 and to the MAC value calculation sections 208 and 220 (to be discussed later). At the time of authentication, the authentication section 202 reads the media ID from the removable medium 20 and sends the retrieved media ID to the host apparatus 10.

When getting the host apparatus 10 to write a content held therein to the removable medium 20, the user inputs to the host apparatus 10 a content write instruction for recording the content in question to the removable medium 20. In response to the write instruction, the nonce generation request section 124 of the host apparatus 10 sends a nonce generation request (i.e., a command for requesting nonce generation) to the removable medium 20 prompting the latter to generate a BN.

The nonce generation request from the host apparatus 10 is received by the nonce generation request reception section 204 of the removable medium 20. Upon receipt of the nonce generation request, the nonce generation section 206 generates a nonce (BN) as a variable unique to each nonce generation request. The BN may typically be a single-use random number or some other suitable value assured of its uniqueness. Using the session key Ks received from the authentication section 202, the MAC value calculation section 208 calculates a MAC value (Dm) of the BN generated by the nonce generation section 206. The nonce transmission section 210 sends to the host apparatus 10 both the BN generated by the nonce generation section 206 and the MAC value (Dm) calculated by the MAC value calculation section 208 regarding the BN.

The nonce reception section 126 of the host apparatus 10 receives the BN and MAC value (Dm) from the removable medium 20. Using the session key Ks received from the authentication section 122, the verification section 128 calculates the MAC value of the received BN. The verification section 128 proceeds to compare the calculated MAC value with the received MAC value (Dm). If there is a full match between the two MAC values, then the received BN is found to be legitimate. If there is a mismatch between the two MAC values, then the BN may have been falsified. In the latter case, the recording process is terminated.

The host apparatus 10 has the content database 132 established illustratively in the storage device 110. One or a plurality of content-related data files (i.e., files of contents themselves, of content keys, etc.) are retained in the content database 132. If the BN is found normal by the verification section 128, then the encryption section 130 reads from the content database 132 the target content-related data file to be recorded, such as a content key file (Kt) for the content to be recorded. The encryption section 130 proceeds to encrypt the retrieved content key file using illustratively the media ID, secret key, and BN in accordance with a predetermined encryption technique.

The data recording section 134 writes the content key file encrypted by the encryption section 130 (EncKt) to the ordinary data storage area 22 of the flash memory 21 in the removable medium 20. The removable medium 20 attached to the host apparatus 10 functions as an external storage apparatus of the host apparatus 10. For that reason, the data recording section 134 of the host apparatus 10 can write data such as the encrypted content key file (EncKt) directly to the removable medium 20. Alternatively, upon recording of the content key file (Kt), the data recording section 134 may simultaneously write other data files associated with the content in question, such as a file of the content itself and a file indicative of a relevant license to the removable medium 20.

The hash calculation section 136 calculates a hash value of the encrypted content key file (EncKt) by use of a predetermined hash function. The hash value constitutes the above-mentioned content token (CT). Using the session key Ks received from the authentication section 122, the MAC value calculation section 138 calculates a MAC value (Dm2) of the hash value (CT) generated by the hash calculation section 136. The nonce write request section 140 sends to the removable medium 20 a nonce write request, i.e., a command requesting the recording of the BN generated by the removable medium 20. The nonce write request includes the hash value (CT) generated by the hash calculation section 136 and the MAC value (Dm2) derived from the CT generated by the MAC value calculation section 138.

The nonce write request reception section 212 receives from the host apparatus 10 the nonce write request including the CT and the MAC value (Dm2) of that CT. The verification section 214 calculates the MAC value of the received CT using the session key Ks received from the authentication section 122. The verification section 214 proceeds to compare the calculated MAC value with the received MAC value (Dm2). If there is a full match between the two MAC values, the received CT is found to be legitimate. If there is a mismatch between the two MAC values, then the CT may have been falsified. In the latter case, the recording process is terminated.

If the CT is found legitimate by the verification section 214, then the nonce recording section 216 associates the nonce (BN) generated most recently by the nonce generation section 206 with the hash value (CT) received from the host apparatus 10, and writes the BN and CT to the data management area 23 of the flash memory 21.

When the above steps have been carried out, the target content-related data file to be recorded is securely written to the flash memory 21 in the removable medium 20. The nonce (BN) and hash value (CT) with regard to this recording process are also written securely to the flash memory 21.

When getting the host apparatus 10 to use a content recorded on the removable medium 20 (e.g., to reproduce, copy, or move), the user inputs to the host apparatus 10 a content use instruction for using the content in question found on the removable medium 20. In response to the use instruction, the transmission request section 142 of the host apparatus 10 sends to the removable medium 20 a transmission request requesting the removable medium 20 to send a nonce (BN) and a hash value (CT) stored thereon (i.e., a command for requesting transmission of the data in question). At this point, the transmission request section 142 requests the removable medium 20 to transmit the BT and CT associated with the user-designated content to be used. The requests to have the BN and CT sent may be effected simultaneously using a single command. Alternatively, the transmission of the BN and that of the CT may be requested in temporally staggered fashion using two commands.

The transmission request reception section 218 of the removable medium 20 receives the transmission request from the host apparatus 10. In response to the received transmission request, the MAC value calculation section 220 reads the BN and CT associated with the designated content from the flash memory 21, and calculates the MAC value (Dm3) of the BN and the MAC value (Dm4) of the CT using the session key Ks received from the authentication section 202. Upon receipt of the transmission request, the management information transmission section 222 reads the BN and CT associated with the designated content from the flash memory 21. The management information transmission section 222 proceeds to send to the host apparatus 10 the retrieved BN and CT as well as the MAC values (Dm3, Dm4) of the BN and CT generated by the MAC value calculation section 220.

The management information reception section 144 of the host apparatus 10 receives the BN, CT, and MAC values (Dm3, Dm4) from the removable medium 20. The verification section 146 calculates the MAC value of the received BN and that of the CT using the session key Ks received from the authentication section 122. The verification section 146 proceeds to compare the calculated MAC value of the BN with the received MAC value (Dm3). If there is a full match between the two MAC values, then the received BN is found to be legitimate. In case of a mismatch between the two MAC values, the BN may have been falsified. In this case, the ongoing process is terminated. Likewise, the verification section 146 compares the calculated MAC value of the CT with the received MAC value (Dm4). If there is a full match between the two MAC values, then the received CT is found to be legitimate. In case of a mismatch between the two MAC values, the CT may have been falsified. In this case, the ongoing process is also brought to an end.

The data acquisition section 148 acquires an encrypted data file regarding the content to be used, such as an encrypted content key file (EncKt), from the flash memory 21 of the removable medium 20. Since the host apparatus 10 can directly access the removable medium 20, the data acquisition section 148 may read the relevant data file from the flash memory 21 of the removable medium 20.

The hash calculation section 150 calculates the hash value (CT') of the data file acquired by the data acquisition section 148. The hash value matching section 152 compares the hash value (CT) received by the management information reception section 144 with the hash value (CT') calculated by the hash value calculation section 130. In the event of a mismatch between the two hash values (CT, CT'), the CT may have been falsified. In this case, the content-using process is terminated. If there is a full match between the two hash values, then the hash value (CT) received from the removable medium 20 is found to be legitimate.

When the hash value from the removable medium 20 is found legitimate, the decryption section 154 decrypts the encrypted data file such as the encrypted content key file (EncKt) acquired by the data acquisition section 148 and outputs the decrypted data. Illustratively, the decryption section 154 decrypts the content key file (Kt) in accordance with a predetermined encryption technique using the BN, media ID, and secret key received by the management information reception section 144. The decrypted data is offered to a content use section (not shown) that utilizes the content (e.g., for reproduction). The decryption section 154 acquires the content key file (Kt) as the encrypted data by decrypting the encrypted content key file (EncKt). The encrypted content is then decrypted and reproduced by decrypting the encrypted content using the content key file.

Upon recording of a content-related data file, as described above, the recording system 1 of the first embodiment encrypts the data file using a nonce (BN) issued by the removable medium 20. The data file is then recorded to the removable medium 20 in association with the BN and with the hash value (CT) of that data file. The BN allows the data file to be "bound" to the removable medium 20 to which the file was first recorded, so that illegal copying of contents between media is prevented. Upon use of a content, a hash value (CT') of the relevant data file retrieved from the removable medium 20 is calculated, and the hash value (CT') is compared with the CT read from the removable medium 20 for a match. A mismatch between the compared hash values reveals falsification (e.g., illicit initialization of information) of the data file in question. This prevents illegal use of the content in question.

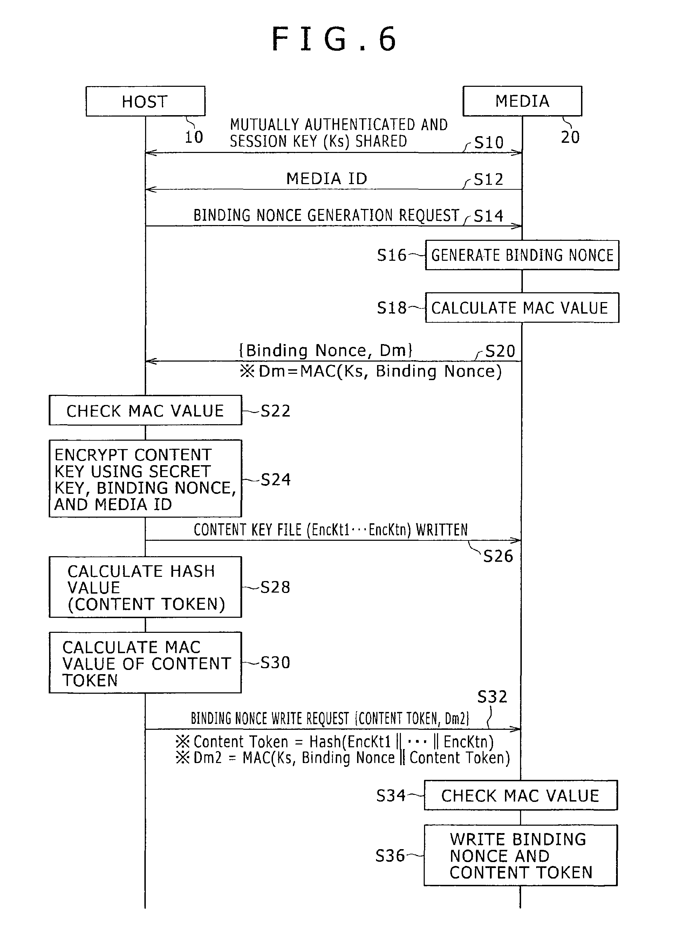

Described below in reference to Fig. 6 is how a content is recorded by the recording system 1 of the first embodiment. Fig. 6 is a sequence diagram depicting a recording method for use with the recording system of the first embodiment.

In step S10 of Fig. 6, upon recording of a content to the removable medium 20, the host apparatus 10 performs mutual authentication with the removable medium 20 and shares a session key Ks therewith. In step S12 following the authentication, the host apparatus 10 acquires from the removable medium 20 a media ID that is assigned uniquely to this medium 20. As an alternative of this step, the removable medium 20 may calculate a MAC value of the media ID and send the calculated MAC value to the host apparatus 10 together with the media ID. This prevents falsification of the media ID.

In step S14, the host apparatus 10 sends a nonce generation request to the removable medium 20 requesting the latter to generate a binding nonce (BN). In step S16, the removable medium 20 receives the nonce generation request from the host apparatus 10 and generates a BN such as a random number or a counter value accordingly. The BN is specific to the ongoing recording process; once the process is terminated, the same value will not be generated again. In step S18, the removable medium 20 calculates a MAC value (Dm) of the BN against falsification. In step S20, the removable medium 20 returns the calculated MAC value (Dm) to the host apparatus 10 together with the BN. The MAC value is calculated by use of functions such as CBC-MAC (Cipher Block Chaining-MAC), O-MAC, or HMAC (Keyed-Hashing for Message Authentication Code) based on the AES (Advanced Encryption Standard) using the session key Ks shared in step S10 earlier. The same applies to the calculation of the MAC value defined as follows:

$$Dm = MAC \ (Ks, \ Binding \ Nonce)$$

In step S22, the host apparatus 10 calculates the MAC value (Dm') of the BN using the session key Ks and checks to determine whether the MAC value (Dm) sent from the removable medium 20 matches the calculated MAC value (Dm'). If there is a full match between the two MAC values (Dm'=Dm), that means the BN acquired from the removable medium 20 is not falsified. In case of a mismatch between the two MAC values, the BN may have been falsified. In the latter case, the recording process should not be allowed to continue. The calculation involved is as follows:

$$Dm' = MAC \ (Ks, \ Binding \ Nonce)$$

In step S24, the host apparatus 10 encrypts a data file regarding the content to be recorded (e.g., content key file (Kt)) using the BN acquired from the removable medium 20. For example, the host apparatus 10 encrypts the content key file (Kt) using the media ID acquired in step S12, the BN obtained in step S20, and a secret key Km. The secret key Km may be one (e.g., MKB) which is shared among a plurality of host apparatuses 10 according to some other suitable technique. As the encryption technique, the AACS Recordable Video Book scheme may be applied as follows:

$$EncKt = AES - 128E \ (Kpa, \ Kt \ xor \ AES-H \ (Usage))$$

$$Kpa = AES - G \ (Km, \ Binding \ Nonce)$$

The data to be encrypted here is not limited to the content key (Kt). Any data regarding the content of interest may be encrypted, including the content itself, a license defining the use conditions for the content, or content identification information.

In step S26, the host apparatus 10 writes the encrypted data file to the ordinary data storage area 22 of the flash memory 21 in the removable medium 20. If there are a plurality of content keys (Kt) for data to be recorded with, then the host apparatus 10 may put the multiple encrypted content keys (EncKt) into a single content key file (EncKt1 ... EncKtn) and record the content key file to the removable medium 20.

In step S28, the host apparatus 10 calculates the hash value of the encrypted content key file (EncKt1 ... EncKtn), the hash value constituting the content token (CT) mentioned above. The way to calculate the hash value may be by using a hash function such as SHA-1 (Secure Hash Algorithm 1) or by resorting to the MAC value with its key based on the secret key Km held by the host apparatus 10. The calculation involved is defined as follows:

$$\text{Content token} = \text{Hash (EncKt1}\| \ldots \|\text{EncKtn)}$$

In step S30, the host apparatus 10 calculates the MAC value (Dm2) of the CT derived from the above-described hash calculation by use of the session key Ks. Although the hash value Dm2 of the CT alone may be obtained using the expression (1) shown below, it is preferable to calculate the MAC valued Dm2 of the CT and the BN combined using the expression (2) also shown below. The latter MAC value (Dm2) reflecting both the BN and the CT allows the content to be recorded solely in association with the most recent BN, whereby illicit initialization of content-related information is prevented and security is enhanced. The expressions involved are as follows:

$$\text{Dm2} = \text{MAC (Ks, content token)}$$

$$\ldots \ (1)$$

or,

$$\text{Dm2} = \text{MAC (Ks, binding nonce}\|\text{content token)}$$

$$\ldots \ (2)$$

With the above arrangement in place, when a plurality of BNs are generated by the removable medium 20 upon sharing of the session key Ks following mutual authentication, it becomes possible to verify the CT with regard to the most recent BN. The verification is performed in step S34, to be described later.

In step S32, the host apparatus 10 sends a nonce write request to the removable medium 20 requesting the latter to record the generated BN. The nonce write request includes the CT calculated in step S28 and the MAC value (Dm2) generated in step S30 above.

In step S34, the removable medium 20 receives the nonce write request (CT and Dm2) from the host apparatus 10 and proceeds to verify the MAC value. More specifically, using the session key Ks, the removable medium 20 calculates either the MAC value (Dm2') of the CT received from the host apparatus 10 (by resorting to the expression (3) below) or the MAC value (Dm2') of the CT and the BN combined (by having recourse to the expression (4) below). The removable medium 20 then compares the MAC value (Dm2) sent from the host apparatus 10 with the calculated MAC value (Dm2') for a match (Dm2' = Dm2). A full match between the two MAC values verifies that the CT acquired from the host apparatus 10 is not falsified. If there is a mismatch between the two MAC values, that means the CT may have been falsified. The recording process should then be discontinued and the content key file deleted from the flash memory 21. The expressions involved are as follows:

$$\text{Dm2' } = \text{MAC (Ks, content token)}$$

$$\ldots \ (3)$$

or,

$$\text{DM2' } = \text{MAC (Ks, binding nonce}\|\text{content token)}$$

$$\ldots \ (4)$$

If a full match is detected between the two MAC values (Dm2, Dm2') following the above calculations, then the removable medium goes to steps S36 and records the CT received from the host apparatus 10 in step S32 to the data management area 23 of the flash memory 21 in association with the BT generated in step S16 earlier. If the CT corresponding to the BN is already recorded in the flash memory 21, the existing CT will not be overwritten with the new one. This prevents duplicate registration of the same BN.

According to the above-described recording method for use with the recording system of the first embodiment, the removable medium 20 generates a unique binding nonce (BN) upon recording of a data file such as the content key (Kt) to the removable medium 20. The BN is used to encrypt the data file (Kt), and the encrypted data file (EncKt) is associated with the BN on a one-to-one basis and recorded securely. If the BN and data file were recorded without being further processed, the two would be written to the two different storage areas 22 and 23 in the flash memory 21 with no association therebetween. With the first embodiment, the CT as the hash value of the data file is recorded to the data management area 23 in association with the BN. The CT serves as the identification information representative of the data file itself. For that reason, writing the CT to the data management area 23 in association with the BN makes it possible to associate the BN recorded in the data management area 23 with the data file written to the ordinary data storage area 22.

In the above context, it is also possible to associate the BN with the data file by recording the data file itself such as the content key (Kt) to the data management area 23. However, the secure data management area 23 on the removable medium 20 has merely a limited size (e.g., of several tens of kilobytes). This desires holding the size of the data to be recorded below the predetermined limit. According to the first embodiment, the data size of the data management area 23 can be reduced by writing to the data management area 23 the CT which is the hash value of the data file.

When the BN and the CT are recorded to the removable medium 20 in association with each other as described above, there is no need to record the data file such as the content key (Kt) and the BN to the same sector as with the traditional recording method (Fig. 1). Because the data file and the BN are written separately to different storage areas in temporally staggered fashion, a significantly higher degree of freedom is provided in devising the file formats for data files to be recorded in.

When the data file such as the content key (Kt) is encrypted (in step S24), the media ID and the content key (Kt) are cryptically associated with each other. This means that the data file is usable merely if it is recorded on the removable medium 20 having the media ID in question. Where the data file is "bound" to the removable medium 20 in this manner, illicit copying of the data file between media is prevented.

When the MAC value of the CT is calculated in step S30 above, it is preferred that the MAC value (Dm2) of the CT and the BN combined be calculated so that the calculated MAC value (Dm2) will be verified in step S34. The reason for the preferred way of calculating the MAC value is that the most recent BN generated by the removable medium 20 can be written to the medium 20 in association with the CT, the MAC value (Dm2) being verified as that of the CT and BN combined. This arrangement is effective where the removable medium 20 generates a plurality of BNs during the sharing of a single session key Ks with the host apparatus 10 (i.e., where contents are recorded a plurality of times). In this case, if a previously generated BN remained effective, then a content moved out of the removable medium 20 could be written back to it using the old BN. To prevent this fraudulent practice desires rendering effective merely the most recent BN generated by the removable medium 20 for a one-time use. It is thus preferred that the MAC value (Dm2) of the BN and CT combined be used for verification when the BN and CT are recorded.

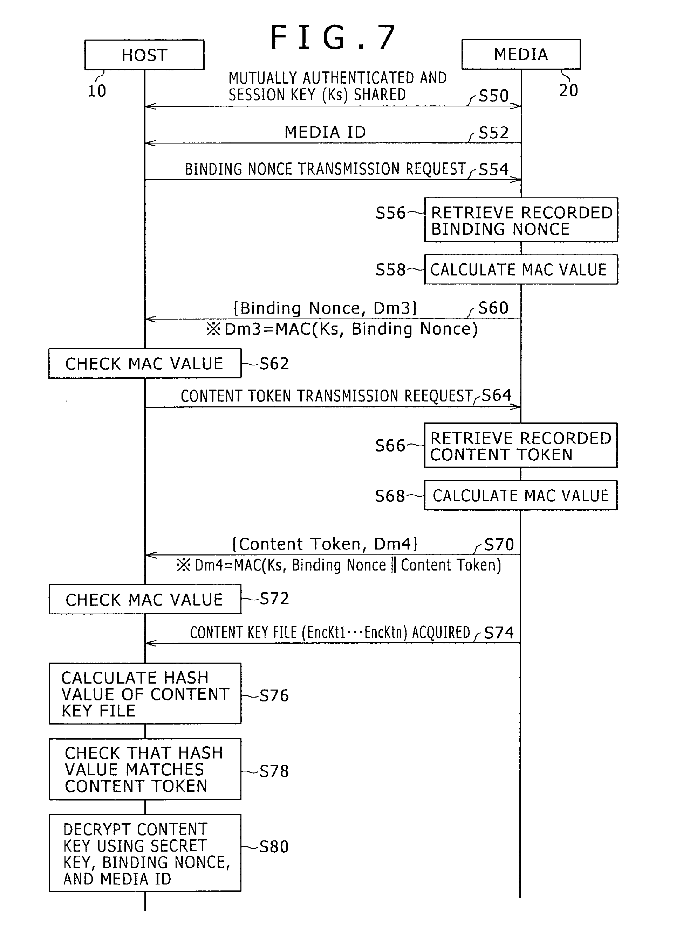

Described below in reference to Fig. 7 is how a content is used by the recording system 1 of the first embodiment. Fig. 7 is a sequence diagram illustrating a content-using method for use with the recording system 1 as the first embodiment.

In step S50 of Fig. 7, upon use of a content recorded on the removable medium 20, the host apparatus 10 and the removable medium 20 perform mutual authentication to share a session key Ks therebetween. In step S52 following the mutual authentication, the host apparatus 10 acquires from the removable medium 20 a media ID assigned uniquely to the medium 20. At this point, the removable medium 20 may calculates the MAC value of the media ID and send the calculated MAC value to the host apparatus 10 together with the media ID. This prevents falsification of the media ID.

In step S54, the host apparatus 10 sends a BN transmission request to the removable medium 20 requesting the medium 20 to send the BN stored thereon. Upon receipt of the transmission request from the host apparatus 10, the removable medium 20 goes to step S56 and reads a stored BN from the data management area 23 of the flash memory 21. At this point, the removable medium 20 reads the BN associated with the content designated by the host apparatus 10. Although not shown in Fig. 7, the host apparatus 10 upon use of a content acquires a list of stored contents from the removable medium 20 and displays the content list for the user to choose from. When the user selects a desired content from the displayed list, the host apparatus 10 designates the user-designated content as the content to be used. The host apparatus 10 thus possesses information about the previously stored contents on the removable medium 20 and requests accordingly the transmission of the BN associated with the user-selected content from the removable medium 20.

In step S58, using the session key Ks shared in step S50, the removable medium 20 calculates the MAC value (Dm3) of the BN retrieved from the flash memory 21. In step S60, the removable medium 20 sends the calculated MAC value (Dm3) to the host apparatus 10 together with the BN in question. The calculation involved is defined as follows:

$$\mathrm{Dm3 = MAC\ (Ks,\ binding\ nonce)}$$

Upon receipt of the BN from the removable medium 20, the host apparatus 10 goes to step S62, calculates the MAC value (Dm3') of the BN using the session key Ks, and checks to see if the MAC value (Dm3) sent from the removable medium 20 matches the calculated MAC value (Dm3'). A full match between the two MAC values verifies that the BN acquired from the removable medium 20 is not falsified. If there is a mismatch between the two MAC values (Dm3, Dm3'), that means the BN may have been falsified. In the latter case, the content-using process has to be discontinued. The calculation involved is defined as follows:

$$\mathrm{Dm3' = MAC\ (Ks,\ binding\ nonce)}$$

In step S64, the host apparatus 10 sends a CT transmission request to the removable medium 20 requesting the latter to send a stored CT. Upon receipt of the transmission request from the host apparatus 10, the removable medium 20 goes to step S66 and reads a relevant CT from the data management area 23 of the flash memory 21. At this point, the removable medium 20 retrieves the CT associated with the content designated by the host apparatus 10 (i.e., the CT related to the BN read in step S56 earlier).

In step S68, using the session key Ks shared in step S50, the removable medium 20 calculates the MAC value (Dm4) of the BN and the CT retrieved from the flash memory 21 combined. In step S70, the removable medium 20 returns the CT to the host apparatus 10 together with the calculated MAC value (Dm4). The calculation involved is defined as follows:

$$\mathrm{Dm4 = MAC\ (Ks,\ binding\ nonce \| content\ token)}$$

Upon receipt of the CT from the removable medium 20, the host apparatus 10 goes to step S72, calculates the MAC value (Dm4') of the BN using the session key Ks, and checks to determine whether the MAC value (Dm4) sent from the removable medium 20 matches the calculated MAC valued (Dm4'). A full match between the two MAC values verifies that the CT acquired from the removable medium 20 is not falsified. A mismatch between the two MAC values (Dm4, Dm4') indicates that the CT may have been falsified. In the latter case, the content-using process has to be discontinued. The calculation involved is defined as follows:

$$\mathrm{Dm4' = MAC\ (Ks,\ binding\ nonce \| content\ token)}$$

In step S74, the host apparatus 10 acquires the data file associated with the content to be used from the ordinary data storage area 22 of the flash memory 21 in the removable medium 20. Illustratively, the data file may be a content key (Kt) file encrypted using the BN or the like, a content file encrypted using the content key (Kt), or a license. Described below is an example in which the content key file (Kt) is acquired.

In step S76, the host apparatus 10 calculates the hash value (CT') of the content key file (EncKt1 ... EncKtn) obtained from the removable medium 20. The hash value is called "content token' (CT')." The calculation involved is defined as follows:

$$\mathrm{Content\ token' = Hash\ (EncKt1 \| \ ... \ \| EncKtn)}$$

In step S78, the host apparatus 10 compares the hash value (CT') calculated in step S76 with the CT received from the removable medium 20 in step S70 earlier, to see if the two hash values (CT, CT') match. If there is a mismatch between the two hash values, that means the CT received from the removable medium 20 may have been falsified. In that case, the content-using process has to be discontinued.

In the event of a full match between the two hash values (CT, CT'), the host apparatus 10 goes to step S80 and decrypts the data file of the encrypted content key (Kt) using the BN obtained from the removable medium 20. Illustratively, the host apparatus 10 decrypts the content key (Kt) using the media ID obtained in step S52, the BN acquired in step S60, and the secret key Km. The secret key Km may typically be one (e.g., MKB) which is shared among a plurality of host apparatuses 10 by some suitable technique. The decryption, like the encryption method discussed above, may be carried out based on the AACS Recordable Video Book scheme defined as follows:

$$Kt = AES - 128D \; (Kpa, \; EncKt) \; xor \; AES-H \; (Usage)$$

$$Kpa = AES - G \; (Km, \; binding \; nonce)$$

The decrypted data of the content key (Kt) is obtained as described. The decrypted content key (Kt) is then utilized to make use of the content of interest stored encrypted in the removable medium 20. More specifically, the host apparatus 10 evaluates the license of the target content to be used. If the use conditions set forth by the license (e.g., allowable reproduction count, reproduction time limit, copy count, etc.) are met, the host apparatus 10 reads the encrypted content of interest from the removable medium 20 and decrypts the retrieved content using the decrypted content key (Kt). The host apparatus 10 then decodes the decrypted content and causes the output device 109 to output the video and audio of the reproduced data. In this manner, the host apparatus 10 makes use of the user-selected content from among the contents stored in (i.e., bound to) the removable medium 20.

According to the content-using method described above, the host apparatus 10 can securely acquire the BN recorded on the removable medium 20 and the hash value (CT) of a content-related data file (e.g., content key file (Kt)) from the medium 20. The host apparatus 10 calculates the hash value (CT') of the acquired data file and compares the calculated hash value (CT') with the hash value (CT) found recorded on the removable medium 20 for a match. The comparison reveals any falsification or illicit initialization of the data file that may have been committed on the removable medium 20. If such falsification or illicit initialization is detected, then the content-using process is terminated in order to protect the copyright involved.

Described below in reference to Figs. 8 and 9 is a recording system 2 as the second embodiment of the present invention. Fig. 8 is a schematic view explanatory of the recording system 2 practiced as the second embodiment of the present invention. Fig. 9 is a block diagram showing a typical structure of a portable reproduction apparatus 30 constituting the recording apparatus of the second embodiment.

In connection with the first embodiment discussed above, the removable medium 20 typified by memory cards was cited as the storage apparatus. The removable medium 20 was shown to store data such as contents onto its storage medium. It should be noted that the removable medium 20 was a device incapable of reproducing contents stored therein. By contrast, the storage apparatus of the second embodiment may be constituted illustratively by a content processing apparatus structured to integrate its storage medium with a drive configured to write and read data to and from the storage medium. This type of content processing apparatus is an electronic device furnished with a drive-equipped storage medium and having the capabilities to process (e.g., to reproduce) the contents stored on the storage medium. Such content processing apparatuses may typically include portable terminals such as portable video/audio players, PDAs and mobile phones, as well as recording/reproducing apparatuses such as digital cameras, digital video cameras and HDD recorders. In the ensuing description, a portable reproduction apparatus (i.e., portable video/audio player) will be explained as the typical content processing apparatus.

As shown in Fig. 8, the recording system 2 of the second embodiment is made up of the host apparatus 10 (corresponding to an information processing apparatus) and the portable reproduction apparatus 30 connectable to the host apparatus 10. The portable reproduction apparatus 30 is connected to the host apparatus 10 through a cable such as a USB cable or by way of a wireless communication network such as a wireless LAN. As with the above-described removable medium 20, the portable reproduction apparatus 30 generates BNs and records the generated BNs and CTs to the storage medium according to the AACS specifications. How the portable reproduction apparatus 30 is typically structured is described below.

As shown in Fig. 9, the portable reproduction apparatus 30 includes a control device 31, an input device 32, a hard disk 33 serving as a storage medium, a communication device 34, an authentication device 35, a nonce generation device 36, a verification device 37, a drive 38, a reproduction device 39, a display device 40, and an audio output device 41.

The control device 30 is typically composed of a micro controller. The control device 30 operating in accordance with the programs installed in the portable reproduction apparatus 30 controls the component devices of the latter. The input device 31 is generally constituted by such operating elements as a touch-sensitive panel, buttons, switches, and/or levers; and by an input control circuit that generates input signals and outputs them to the control device 31. By suitably operating the input device 31, the user of the portable reproduction apparatus 30 can input diverse data and operating instructions to the apparatus 30.

The hard disk 33 is a storage medium used by the portable reproduction apparatus 30 to accommodate various data. The drive 38 is a device for writing and reading data to and from the hard disk 33. The hard disk 33 and drive 38 make up a hard disk drive (HDD). The HDD is assigned beforehand a media ID as its unique identification information. The media ID is stored securely on the HDD. As with the flash memory 21 in the above-described removable medium 20, the hard disk 33 has two storage areas: an ordinary data storage area 22 for storing content-related data files, and a data management area 23 for storing BNs in association with CTs.

In functional terms, the communication device 34 and authentication device 35 are substantially similar to the communication device 24 and authentication device 25 of the removable medium 20 (see Fig. 4), respectively. Likewise the nonce generation device 36 and verification device 37 are substantially similar to the nonce generation device 26 and verification device 27 of the removable medium 20, respectively. Detailed explanations of these component devices thus will not be discussed further.

The reproduction device 39 is made up of a decryption device for decrypting encrypted contents using the content key (Kt), and a decoder for decoding the contents. The reproduction device 39 has the capability of reproducing contents held on the hard disk 33. The video data of the content reproduced by the reproduction device 39 is displayed on the display device 40; the audio data of the reproduced content is output through the audio output device 41.

The portable reproduction apparatus 30 of the above-described structure has the same component sections as those of the removable medium 20 indicated in Fig. 5. When the portable reproduction apparatus 30 is connected to the host apparatus 10, the contents held by the host apparatus 10 may be written to the hard disk 33, and the contents stored in the portable reproduction apparatus 30 may be utilized by the host apparatus 10. The content recording and using sequences between the host apparatus 10 and the portable reproduction apparatus 30 are the same as those shown in Figs. 6 and 7 above and thus will not be discussed further.

Described in the foregoing paragraphs were the structures of the recording systems 1 and 2 practiced as the first and the second embodiments of the present invention, as well as the content recording and using methods carried out in conjunction with the recording systems 1 and 2. According to the embodiments of the present invention, the host apparatus 10 writes contents to the removable medium 20 or portable reproduction apparatus 30 (called the media 20, 30 hereunder) as the storage apparatus for subsequent use. Every time a content is to be recorded, a binding nonce (BN) generated uniquely for the content in question is sent securely to the host apparatus 10. In turn, the host apparatus 10 generates the hash value (CT) of a data file regarding the target content to be recorded, and writes the generated CT securely to the media 20, 30 in association with the BN. This prevents illegal copying of any content recorded on the media 20, 30 or illicit initialization of information about that content.

The recording method according to the embodiments of the present invention has the advantage of not being dependent on the format of data files (e.g., contents themselves and content key (Kt) files) regarding the contents to be recorded. The inventive recording method also works in a manner independent of the recording format of the media 20, 30.

In the past, according to the ordinary recording method for use with optical disks such as BDs based on the AACS (see Fig. 1), the host apparatus was desired to designate the address on the optical disk at which to record the data file such as the content key file (Kt) prior to the generation of a BN. The requirement had to be met so as to record both the BN and the data file simultaneously to the same sector. In that sense, the ordinary recording method was heavily dependent on the physical format on the media (e.g., optical disks). With the data file recording process thus restricted, the ordinary recording method was not fit for the media to be accessed on a file-by-file basis under PTP (Picture Transfer Protocol), MTP (Media Transfer Protocol) or the like. Whenever a data file recorded on a piece of media was updated (changed or deleted), then the BN corresponding to that data file had to be deleted. It was thus necessary to monitor continuously the updates of the data files associated with BNs.

According to the recording method of the embodiments of the present invention, by contrast, the hash value (CT) of a given data file is used to associate that data file with the corresponding BN. This eliminates the need for recording both the data file and the BN simultaneously to the same address; the two may be written separately to the two different areas 22 and 23 of the storage medium in temporally staggered fashion. When the degree of freedom is thus enhanced in recording data files, the inventive recording method can be used advantageously in conjunction with the media that are accessed on a file-by-file basis.

According to the above embodiments, upon request of the generation of a BN for a data file, the host apparatus 10 need not grasp beforehand the address to which to record the data file, which was a requisite in the past. It is also not necessary to declare the simultaneous recording of the BN and the data file to the media. Because the processes involved with such prior grasping and declaration are omitted, the structure of the apparatus is simplified and processing load is alleviated.

In addition, upon use of a content, the above embodiments verify the related data file for falsification based on the hash value (CT) of that data file. When a data file recorded on the media 20, 30 has been updated, there is no need to delete the BN corresponding to that data file. That is, there is no need to monitor continuously any updates of the data files associated with the BNs.

The above embodiments allow contents to be saved temporarily from the media 20, 30. In the past, a given data file and its BN were integrally recorded on the BD. Therefore, it may have been impossible to temporarily save the data file alone (i.e., to delete the data file temporarily from the media before writing the same data file back thereto). According to the inventive recording method, by contrast, the BN is recorded in the data management area 23 and managed independently of the data file. This makes it possible temporarily to save the data file from the ordinary storage area before writing the data file back thereto for another use by utilizing the corresponding BN held in the management area 23.

According to the inventive recording method, there is no need to grasp beforehand the address on the media to which to write a data file upon generation of a BN unlike in the past. That means the inventive recording method can be used independently of the recording format in which to record data files on the media 20, 30. This translates into the advantage of allowing the application of the host apparatus 10 to freely select the method for recording data files to the media.

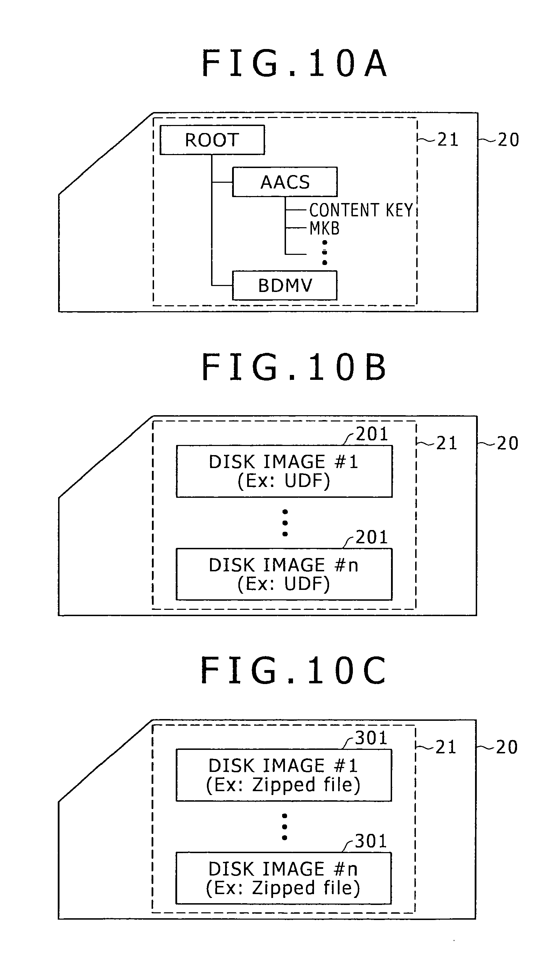

The inventive recording method can be applied flexibly to cases such as one where a single huge file is created on the media 20, 30 as a virtual file system to which to record content key files and contents, or to a case where content key files and contents are compressed into a single file before being recorded. Examples of these cases are explained below in reference to Figs. 10A through 10C.

According to the inventive recording method, content keys and content data files can be normally recorded in an ordinary directory structure to the removable medium 20, as shown in Fig. 10A. With the inventive recording method, disk images each made up of a set of a plurality of data files such as content keys and contents may be recorded as a single file 201 each, as depicted in Fig. 10B. It is also possible, as shown in Fig. 10C, to compress sets of a plurality of data files such as content keys and contents into a single file 301 each, using a suitable file compression format such as Zip, or to arrange such data files into a single file using an appropriate archiving format such as TAR (Tape Archival and Retrieval Format) for recording.

According to the above embodiments, as discussed above, contents may be recorded securely in relatively flexible sequences to the media 20, 30 which are accessed on a file-by-file basis. It is also possible to record contents securely to the media without being dependent on the format in which to write data files to the media.

Although the description made above in reference to the accompanying drawings contains many specificities, these should not be construed as limiting the scope of the embodiments of the invention but as merely providing illustrations of some of the presently preferred embodiments of this invention. It is to be understood that changes and variations may be made without departing from the scope of the claims that follow.

For example, although the host apparatus 10 was shown to use the hash value of the content key (Kt) as the hash value (i.e., content token) for the data file to be recorded to the media 20, 30, this is not limitative of the embodiments of the present invention. Alternatively, the hash value may be that of a given content-related data file such as a content itself, a content key, license, content identification information, or a combination of any or all of these.

It should be understood by those skilled in the art that various modifications, combinations, subcombinations and alterations may occur depending on design requirements and other factor in so far as they are within the scope of the appended claims or the equivalents thereof.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

The following numbered clause describes matter that may be combined as indicated with claim 3;
Clause 1. The recording system according to claim 3, wherein said information processing apparatus and said storage apparatus each calculate the message authentication code value of said hash value and said nonce combined by use of said session key.

The following numbered clauses describe matter that may be combined as indicated with claim 1;
Clause 2. The recording system according to claim 1, wherein
said storage medium of said storage apparatus has an ordinary data storage area and a secure data management area as storage areas; and
said encrypted data file is written to said ordinary data storage area and said hash value and said nonce are written to said data management area.

Clause 3. The recording system according to claim 1, wherein said storage apparatus is a piece of removable media which is attached removably to said information processing apparatus.
Clause 4. The recording system according to claim 1, wherein said storage apparatus is a content processing apparatus structured to integrate said storage medium with a drive configured to write and read data to and from said storage medium.

Clause 5. The recording system according to claim 1, wherein said data file regarding said content includes at least one of four files consisting of a content file, a content key file, an identification information file and a use condition file, said content file having said content, said content key file being used to decrypt said encrypted data file, said identification information file representing identification information for identifying said content, said use condition file defining conditions for using said content.

The following numbered clause describes matter that may be combined as indicated with claim 6;

Clause 6. The information processing apparatus according to claim 6, wherein, when calculating the message authentication code value of said hash value, said message authentication code value calculation section calculates the message authentication code value of said hash value and said nonce combined by use of said session key.

The following numbered clauses describe matter that may be combined as indicated with claim 4;

Clause 7. The information processing apparatus according to claim 4, wherein

said storage medium of said storage apparatus has an ordinary data storage area and a secure data management area as storage areas; and

said encrypted data file is written to said ordinary data storage area and said hash value and said nonce are written to said data management area.

The following numbered clause describes matter that may be combined as indicated with claim 10;

Clause 8. The storage apparatus according to claim 10, wherein, when calculating the message authentication code value of said hash value, said verification section calculates the message authentication code value of said hash value and said nonce combined by use of said session key.

The following numbered clauses describe matter that may be combined as indicated with claim 8;

Clause 9. The storage apparatus according to claim 8, wherein

said storage medium of said storage apparatus has an ordinary data storage area and a secure data management area as storage areas; and

said encrypted data file is written to said ordinary data storage area and said hash value and said nonce are written to said data management area.

Clause 10. The storage apparatus according to claim 8, wherein said storage apparatus is a piece of removable media which is attached removably to said information processing apparatus.

Clause 11. The storage apparatus according to claim 8, wherein said storage apparatus is a content processing apparatus structured to integrate said storage medium with a drive configured to write and read data to and from said storage medium.

Clause 12. The storage apparatus according to claim 8, wherein said data file regarding said content includes at least one of four files consisting of a content file, a content key file, an identification information file and a use condition file, said content file having said content, said content key file being used to decrypt said encrypted data file, said identification information file representing identification information for identifying said content, said use condition file defining conditions for using said content.

## Claims

1. A recording system comprising:

   a storage apparatus incorporating a storage medium, and
   an information processing apparatus which is connectable to said storage apparatus and which holds a content to be recorded to said storage apparatus; wherein
   upon recording of said content to said storage apparatus, said information processing apparatus sends a nonce generation request to said storage apparatus;
   upon receipt of said nonce generation request from said information processing apparatus, said storage apparatus generates a nonce constituting a variable unique to said nonce generation request and sends the generated nonce to said information processing apparatus;
   using said nonce received from said storage apparatus, said information processing apparatus encrypts a data file regarding said content and records the encrypted data file to said storage medium of said storage apparatus;
   said information processing apparatus calculates a hash value of said encrypted data file and sends a nonce write request including said hash value to said storage apparatus; and
   upon receipt of said nonce write request from said information processing apparatus, said storage apparatus associates said hash value with said nonce and records said hash value and said nonce to said storage medium.

2. The recording system according to claim 1, wherein,
   upon use of said content stored in said storage apparatus, said information processing apparatus sends to said storage apparatus a transmission request requesting transmission of said nonce and said hash value from said storage apparatus;

upon receipt of said transmission request from said information processing apparatus, said storage apparatus reads said nonce and said hash value from said storage medium and sends the retrieved nonce and hash value to said information processing apparatus;

said information processing apparatus acquires said encrypted data file from said storage apparatus through retrieval from said storage medium; and

said information processing apparatus calculates a hash value of said encrypted data file, matches the calculated hash value against said hash value received from said storage apparatus and, if there is a full match between the two hash values, decrypts said encrypted data file using said nonce received from said storage apparatus.

3. The recording system according to claim 1, wherein,

upon recording of said content to said storage apparatus, said information processing apparatus and said storage apparatus mutually authenticate each other so as to share a session key;

upon sending said nonce write request to said storage apparatus, said information processing apparatus calculates a message authentication code value of said hash value using said session key, and sends to said storage apparatus said nonce write request including said hash value and said message authentication code value derived from said hash value;

upon receipt of said nonce write request from said information processing apparatus, said storage apparatus calculates a message authentication code value of said hash value included in said nonce write request by use of said session key and, if there is a full match between the calculated message authentication code value and said message authentication code value derived from said hash value included in said nonce write request, associates said hash value with said nonce upon recording of said hash value and said nonce to said storage medium.

4. An information processing apparatus which is connectable to a storage apparatus incorporating a storage medium and which holds a content to be recorded to said storage apparatus, said information processing apparatus comprising:

a nonce generation request section configured to send a nonce generation request to said storage apparatus;

a nonce reception section configured to receive from said storage apparatus a nonce constituting a variable unique to said nonce generation request in response to said nonce generation request sent to said storage apparatus;

an encryption section configured to encrypt a data file regarding said content by use of said nonce received from said storage apparatus;

a data recording section configured to record the encrypted data file to said storage medium of said storage apparatus;

a hash calculation section configured to calculate a hash value of said encrypted data file; and

a nonce write request section configured to send a nonce write request including said hash value to said storage apparatus.

5. The information processing apparatus according to claim 4, further comprising:

a transmission request section configured to send to said storage apparatus a transmission request requesting transmission of said nonce and said hash value from said storage apparatus;

a management information reception section configured to receive from said storage apparatus said nonce and said hash value through retrieval from said storage medium in response to said transmission request;

a data acquisition section configured to acquire said encrypted data file from said storage apparatus through retrieval from said storage medium;

a hash calculation section configured to calculate a hash value of said encrypted data file acquired from said storage apparatus;

a hash value matching section configured to match the calculated hash value against said hash value received from said storage apparatus; and

a decryption section configured to decrypt said encrypted data file using said nonce received from said storage apparatus if there is a full match between the two hash values.

6. The information processing apparatus according to claim 4, further comprising:

an authentication section configured to perform mutual authentication with said storage apparatus so as to share a session key; and

a message authentication code value calculation section configured to calculate a message authentication code value of said hash value using said session key; wherein

said nonce write request section sends to said storage apparatus said nonce write request including said hash value and said message authentication code value derived from said hash value.

7. The information processing apparatus according to claim 4, wherein said data file regarding said content includes at least one of four files consisting of a content file, a content key file, an identification information file and a use condition file, said content file having said content, said content key file being used to decrypt said encrypted data file, said identification information file representing identification information for identifying said content, said use condition file defining conditions for using said content.

8. A storage apparatus which is connectable to an information processing apparatus and which serves to store a content held by said information processing apparatus, said storage apparatus comprising:

a nonce generation request reception section configured to receive a nonce generation request from said information processing apparatus;

a nonce generation section configured to generate a nonce constituting a variable unique to said nonce generation request in response to said nonce generation request having been received;

a nonce transmission section configured to send said nonce to said information processing apparatus;

a storage medium configured to store a data file regarding said content, said data file being encrypted by said information processing apparatus using said nonce;

a nonce write request reception section configured to receive a nonce write request including a hash value of the encrypted data file from said information processing apparatus; and

a nonce recording section configured to associate said hash value included in said nonce write request with said nonce generated by said nonce generation section upon recording of said hash value and said nonce to said storage medium in response to said nonce write request having been received.

9. The storage apparatus according to claim 8, further comprising:

a transmission request reception section configured to receive from said information processing apparatus a transmission request requesting transmission of said nonce and said hash value to said information processing apparatus through retrieval from said storage medium; and

a management information transmission section configured to send to said information processing apparatus said nonce and said hash value through retrieval from said storage medium in response to said transmission request having been received.

10. The storage apparatus according to claim 8, further comprising:

an authentication section configured to perform mutual authentication with said information processing apparatus so as to share a session key, wherein

said nonce write request reception section receives said nonce write request including said hash value and a message authentication code value of said hash value calculated by said information processing apparatus using said session key;

said storage apparatus further includes

a verification section configured to calculate a message authentication code value of said hash value included in said nonce write request by use of said session key in response to said nonce write request having been received, so as to verify whether there is a full match between the calculated message authentication code value and the message authentication code value of said hash value included in said nonce write request; and

if there is a full match between the two message authentication code values, then said nonce recording section associates said hash value with said nonce upon recording of said hash value and said nonce to said storage medium.

11. A recording method for use with an information processing apparatus which is connectable to a storage apparatus incorporating a storage medium and which holds a content to be recorded to said storage apparatus, said recording method comprising the steps of:

sending a nonce generation request to said storage apparatus upon recording of said content to said storage apparatus;

receiving from said storage apparatus a nonce constituting a variable unique to said nonce generation request in response to said nonce generation request sent to said storage apparatus;

encrypting a data file regarding said content by use of said nonce received from said storage apparatus;

recording the encrypted data file to said storage medium of said storage apparatus;

calculating a hash value of said encrypted data file; and

sending a nonce write request including said hash value to said storage apparatus causing said storage apparatus to associate said hash value with said nonce upon recording of said hash value and said nonce to said storage medium.

12. A recording method for use with a storage apparatus which is connectable to an information processing apparatus and which serves to store a content held by said information processing apparatus, said recording method comprising the steps of:

receiving a nonce generation request from said information processing apparatus;

generating a nonce constituting a variable unique to said nonce generation request in response to said nonce generation request having been received;

sending said nonce to said information processing apparatus;

recording to said storage medium a data file regarding said content, said data file being encrypted by said information processing apparatus using said nonce;

receiving a nonce write request including a hash value of the encrypted data file from said information processing apparatus; and

associating said hash value included in said nonce write request with said nonce generated in said nonce generating step upon recording of said hash value and said nonce to said storage medium in response to said nonce write request having been received.

13. A program for use with a computer of an information processing apparatus which is connectable to a storage apparatus incorporating a storage medium and which holds a content to be recorded to said storage apparatus, said program causing said computer to execute a procedure comprising the steps of:

sending a nonce generation request to said storage apparatus upon recording of said content to said storage apparatus;

receiving from said storage apparatus a nonce constituting a variable unique to said nonce generation request in response to said nonce generation request sent to said storage apparatus;

encrypting a data file regarding said content by use of said nonce received from said storage apparatus;

recording the encrypted data file to said storage medium of said storage apparatus;

calculating a hash value of said encrypted data file; and

sending a nonce write request including said hash value to said storage apparatus causing said storage apparatus to associate said hash value with said nonce upon recording of said hash value and said nonce to said storage medium.

14. A program for use with a computer of a storage apparatus which is connectable to an information processing apparatus and which serves to store a content held by said information processing apparatus, said program causing said computer to execute a procedure comprising the steps of:

receiving a nonce generation request from said information processing apparatus;

generating a nonce constituting a variable unique to said nonce generation request in response to said nonce generation request having been received;

sending said nonce to said information processing apparatus;

recording to said storage medium a data file regarding said content, said data file being encrypted by said information processing apparatus using said nonce;

receiving a nonce write request including a hash value of the encrypted data file from said information processing apparatus; and

associating said hash value included in said nonce write request with said nonce generated in said nonce generating step upon recording of said hash value and said nonce to said storage medium in response to said nonce write request having been received.

15. An information processing apparatus which is connectable to a storage apparatus incorporating a storage medium and which holds a content to be recorded to said storage apparatus, said information processing apparatus comprising:

nonce generation request means for sending a nonce generation request to said storage apparatus;
nonce reception means for receiving from said storage apparatus a nonce constituting a variable unique to said nonce generation request in response to said nonce generation request sent to said storage apparatus;
encryption means for encrypting a data file regarding said content by use of said nonce received from said storage apparatus;
data recording means for recording the encrypted data file to said storage medium of said storage apparatus;
hash calculation means for calculating a hash value of said encrypted data file; and
nonce write request means for sending a nonce write request including said hash value to said storage apparatus.

# F I G . 1

HOST | MEDIA(DRIVE)

MUTUALLY AUTHENTICATED — S1

MEDIA ID ‖ MAC — S2

BINDING NONCE GENERATION REQUESTED, ADDRESS DESIGNATED — S3

S4
GENERATE BINDING NONCE

S6
Binding Nonce ‖ MAC — S5

ENCRYPT CONTENT KEY AND CALCULATE MAC USING MEDIA ID, BINDING NONCE, AND MKB

S7
LICENSE AND CONTENT KEY FILE WRITTEN TO MEDIA

S8
WRITE DATA SIMULTANEOUSLY WITH BINDING NONCE

FIG.2A

6

AACS-auth

3

HOST APPARATUS

7

DRIVE

8

OPTICAL DISKS
(MEDIA)

FIG.2B

10

AACS-auth

1

HOST APPARATUS
(INFORMATION PROCESSING
APPARATUS)

20

REMOVABLE MEDIA
(STORAGE APPARATUS)

EP 2 045 752 A2

# FIG.3

EP 2 045 752 A2

# FIG.4

REMOVABLE MEDIA 20

FLASH MEMORY 21

SECURE DATA MANAGEMENT AREA 23

| Binding Nonce #1 | Content Token #1 |
| --- | --- |
| Binding Nonce #2 | Content Token #2 |
| Binding Nonce #3 | Content Token #3 |
| ⋮ | ⋮ |
| Binding Nonce #n | Content Token #n |

ORDINARY DATA STORAGE AREA 22

COMMUNICATION DEVICE 24

AUTHENTICATION DEVICE 25

NONCE GENERATION DEVICE 26

VERIFICATION DEVICE 27

EP 2 045 752 A2

FIG.5

# FIG.6

| HOST | | MEDIA |
|---|---|---|

MUTUALLY AUTHENTICATED AND
SESSION KEY (Ks) SHARED — S10
10     20

MEDIA ID — S12

BINDING NONCE GENERATION REQUEST — S14

S16 — GENERATE BINDING NONCE

S18 — CALCULATE MAC VALUE

{Binding Nonce, Dm} — S20
※Dm=MAC(Ks, Binding Nonce)

CHECK MAC VALUE — S22

ENCRYPT CONTENT KEY USING SECRET KEY, BINDING NONCE, AND MEDIA ID — S24

CONTENT KEY FILE (EncKt1···EncKtn) WRITTEN — S26

CALCULATE HASH VALUE (CONTENT TOKEN) — S28

CALCULATE MAC VALUE OF CONTENT TOKEN — S30

S32
BINDING NONCE WRITE REQUEST {CONTENT TOKEN, Dm2}
※Content Token = Hash(EncKt1 ‖ ··· ‖ EncKtn)
※Dm2 = MAC(Ks, Binding Nonce ‖ Content Token)

S34 — CHECK MAC VALUE

S36 — WRITE BINDING NONCE AND CONTENT TOKEN

# F I G . 7

| HOST | | MEDIA |
|------|--|-------|

10                                      20

MUTUALLY AUTHENTICATED AND
SESSION KEY (Ks) SHARED ⌐S50

MEDIA ID ⌐S52

BINDING NONCE TRANSMISSION REQUEST ⌐S54

S56—| RETRIEVE RECORDED BINDING NONCE

S58—| CALCULATE MAC VALUE

{Binding Nonce, Dm3} ⌐S60
※ Dm3=MAC(Ks, Binding Nonce)

| CHECK MAC VALUE | —S62

CONTENT TOKEN TRANSMISSION REEQUEST ⌐S64

S66—| RETRIEVE RECORDED CONTENT TOKEN

S68—| CALCULATE MAC VALUE

{Content Token, Dm4} ⌐S70
※ Dm4=MAC(Ks, Binding Nonce ‖ Content Token)

| CHECK MAC VALUE | —S72

CONTENT KEY FILE (EncKt1···EncKtn) ACQUIRED ⌐S74

| CALCULATE HASH VALUE OF CONTENT KEY FILE | —S76

| CHECK THAT HASH VALUE MATCHES CONTENT TOKEN | —S78

| DECRYPT CONTENT KEY USING SECRET KEY, BINDING NONCE, AND MEDIA ID | —S80

# FIG.8

2

10

30

HOST APPARATUS
(INFORMATION PROCESSING
APPARATUS)

AACS-auth

PORTABLE
REPRODUCTION
APPARATUS
(STORAGE APPARATUS)

# FIG.9

PORTABLE REPRODUCTION APPARATUS ~30

HOST APPARATUS 10

COMMUNICATION DEVICE 34

AUTHENTICATION DEVICE 35

NONCE GENERATION DEVICE 36

VERIFICATION DEVICE 37

DRIVE 38

HD 33

CONTROL DEVICE 31

REPRODUCTION DEVICE 39

INPUT DEVICE 32

DISPLAY DEVICE 40

AUDIO OUTPUT DEVICE 41

EP 2 045 752 A2

# FIG.10A

# FIG.10B

# FIG.10C

**EP 2 045 752 A2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *AACS Homepage,* 02 August 2006, http://www.aac-sla.com/specifications